(19) **Europäisches Patentamt / European Patent Office / Office européen des brevets**

(11) **EP 4 049 392 B1**

(12) **EUROPEAN PATENT SPECIFICATION**

(45) Date of publication and mention of the grant of the patent:
**17.04.2024 Bulletin 2024/16**

(21) Application number: **20800332.7**

(22) Date of filing: **22.10.2020**

(51) International Patent Classification (IPC):
**H04L 1/00** *(2006.01)*

(52) Cooperative Patent Classification (CPC):
**H04L 1/0003; H04L 1/0009; H04L 1/0026; H04L 1/0028**

(86) International application number:
**PCT/IB2020/059953**

(87) International publication number:
**WO 2021/079322 (29.04.2021 Gazette 2021/17)**

(54) **STATISTICAL CHANNEL STATE INFORMATION REPORTING**

**STATISTISCHE KANALZUSTANDSINFORMATIONSMELDUNG**

**RAPPORT D'INFORMATIONS D'ÉTAT DE CANAL STATISTIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2019 US 201962924577 P**

(43) Date of publication of application:
**31.08.2022 Bulletin 2022/35**

(73) Proprietor: **Telefonaktiebolaget LM Ericsson (publ)**
**164 83 Stockholm (SE)**

(72) Inventors:
• **FRÖBERG OLSSON, Jonas**
**590 74 Ljungsbro (SE)**
• **ANDERSSON, Mattias**
**172 39 Sundbyberg (SE)**
• **ANDGART, Niklas**
**247 33 Södra Sandby (SE)**
• **BLANKENSHIP, Yufei**
**Kildeer, Illinois 60047 (US)**
• **ERIKSSON, Erik**
**585 93 Linköping (SE)**
• **HESSLER, Martin**
**587 50 Linköping (SE)**
• **KITTICHOKECHAI, Kittipong**
**177 63 Järfälla (SE)**
• **SHAPIN, Alexey**
**976 32 Luleå (SE)**
• **SINGH, Bikramjit**
**02880 Kirkkonummi (FI)**

(74) Representative: **Zacco Sweden AB**
**P.O. Box 5581**
**Löjtnantsgatan 21**
**114 85 Stockholm (SE)**

(56) References cited:
**EP-A1- 1 783 943       EP-A1- 3 185 446**
**WO-A1-2007/078112     US-A1- 2009 274 204**

EP 4 049 392 B1

**Description**

TECHNICAL FIELD

The present application relates to wireless communication networks, and more particularly, to channel state information reporting in wireless communication networks.

BACKGROUND

Due to the varying nature of wireless communication channels, a data transmission protocol between a gNB and a user equipment (UE) may adapt the modulation scheme and code rate to suit different channel conditions. In New Radio (NR), downlink transmission methods such as multi-layer transmission, transmission point selection, beam selection, etc. are very flexible. Therefore, in NR the Channel State Information (CSI) may consist of one or more of:

- CQI: Channel Quality Indicator
- PMI: Pre-coding Matrix Indicator
- CRI: CSI-RS Resource Indicator
- LI: Layer Indicator
- SSBRI: SS/PBCH Block Resource Indicator
- L1-RSRP

In NR, the reported CQI value can be determined with respect to one of three tables, namely, Table 5.2.2.1-2, Table 5.2.2.1-3, and Table 5.2.2.1-4 of [1], referred to herein generally as Table A, Table B and Table C. If Table A or Table B is configured the UE reports a CQI value such that a PDSCH with modulation, target code rate and transport block size corresponding to the CQI value assigned on a so-called CSI reference resource could be received with a BLEP (BLock-Error Probability) not exceeding 10%. For Table A, the highest modulation is 64QAM while for Table 2 the highest modulation is 256QAM. For Table C the highest modulation is 64QAM but the BLEP shall not exceed $10^{-5}$.

The CSI reporting can be time-restricted for either or both of channel and interference measurement by the parameters *timeRestrictionForChannelMeasurements* and *timeRestrictionForInterferenceMeasurements.*

If time restriction for measurement is configured, the CSI reported shall be based on only the most recent measurement. This means that if time restriction is enabled, then the reported CSI is a momentary evaluation of how the channel and interference looked like at the time of channel measurement and the time of interference measurement. The time for measurement of channel may not be the same as the time of interference measurement. If, however, time-restriction is not configured, the UE can report CSI based on more than one measurement. How the UE obtains CSI based on several measurements is up to UE implementation.

NR also supports CSI reporting of L1-RSRP, which a channel quality measures without taking spatial properties or interference into account.

CSI reporting that is configured via *CSI-ReportConfig* can have one, two or three resource settings where resource settings can be one of three types: aperiodic, semi-persistent and periodic. A resource setting specifies one or more measurement resources. If one resource setting is configured, the *resourcesForChannelMeasurement* is used for L1-RSRP channel measurement. If two resource settings are configured, *resourcesForChannelMeasurement* is used for channel measurement while the second one is used for interference measurement. The second resource setting is either specified via *csi-IM-ResourceForInterference* or *nzp-CSI-RS-ResourcesForInterference.* When a *nzp-CSI RS* resource for interference measurement is configured, the UE performs channel estimation on the actual CSI-RS transmitted, but interprets the signal as interference in CSI evaluation. Three resource settings can also be configured wherein *resourcesForChannelMeasurement* specifies resources for channel measurement and both the *csi-IM-ResourceForInterference* and *nzp-CSI-RS-ResourcesForInterference* specifies the resources for interference measurement.

Periodic CSI reports are sent on PUCCH (or in UCI on PUSCH when there is PUSCH data) and can be linked to periodic or semi-static resource setting(s). Semi-persistent CSI reports can be sent on PUCCH or PUSCH (with or without PUSCH data) and can also be linked to periodic or semi-static resource setting(s). Only aperiodic CSI reports can be linked to all three types of resource settings (periodic, semi-static and aperiodic). For aperiodic CSI reports, a *CSI-AperiodicTriggerState* is associated with one or more *CSI-ReportConfig* and a CSI trigger state is further associated with a codepoint of the "CSI request" field in DCI.

Currently, in NR Rel-16, the CSI reference resource for a serving cell is defined as follows. In the frequency domain, the CSI reference resource is defined by the group of downlink physical resource blocks corresponding to the band to which the derived CSI relates. In the time domain, the CSI reference resource for a CSI reporting in uplink slot $n'$ is defined by a single downlink slot $n-n_{CSI\_ref}$,

A combination of modulation scheme and transport block size corresponds to a CQI index if the combination could be signaled for transmission on the PDSCH in the CSI reference resource according to the Transport Block Size determination described in Subclause 5.1.3.2 of [1], and the modulation scheme is indicated by the CQI index, and the combination of transport block size and modulation scheme when applied to the reference resource results in the effective channel code rate which is the closest possible to the code rate indicated by the CQI index. If more than one combination of transport block size and modulation scheme results in an effective channel code rate equally close to the code rate indicated by the CQI index, only the combination with the smallest of such transport block sizes is relevant.

Citations are provided below for references that are mentioned in the present disclosure.

References:

[1] 3GPP TS 38.214, v15.7.0

US2009274204 A1 discloses methods to measure and report CQI. The CQI is measured for each subband of a system during a measuring period. The CQI can be measured in terms of carrier to interference ratio, CIR, signal to noise plus interference power ratio, SINR, or a carrier power over the interference plus noise ratio, CINR. Then a mean of the CQI and a second order statistic of the CQI, such as CQI standard deviation, are computed and transmitted.

EP3185446 A1 discloses methods to measure and report CQI. An interference measurement circuit obtains a plurality of interference measurements based on CSI-IM REs of the channel that may be separated in time and/or frequency. Then an average of the interference measurements is computed. If the interference measurement includes CQI, then an average CQI measurement is computed.

WO 2007/078112 discloses "a method and an apparatus for measurement report for the decision of transmission mode transition".

EP 1 783 943 discloses a method used by subscriber stations for "selecting a type of modulation and a coding rate based on a signal-to-interference-plus-noise ratio (SINR) variance".

SUMMARY

A method of operating a user equipment, UE, according to the claimed invention includes performing a channel measurement on a measurement resource for channel measurement within a ttime interval of length prs, performing periodic interference measurements on measurement resources within the time interval, wherein the periodic interference measurements are taken according to a period of length pim, where pim < prs, for each interference measurement, determining quality values associated with the interference measurement and the channel measurement, determining a statistical measure based on the quality values, and transmitting the statistical measure to a network node in a channel state information, CSI, report.

The quality measure may include one or more of a channel quality indicator, CQI, symbol information, a Signal-to-Interference-and-Noise Ratio, SINR, and a spectral efficiency, SE. The statistical measure may include one or more of a maximum value, a minimum value, a mean, a variance, a standard deviation and a percentile of distribution.

The method may further include, for each interference measurement within the time intervale, determining a channel quality indicator, CQI, value associated with the interference measurement.

The method may further include generating the channel state information, CSI, report based on the channel measurement and the interference measurements, wherein the CSI report includes an indicator based on one or more of the CQI values.

The indicator may include one or more of the CQI values. The indicator may include a highest one of the CQI values for which a downlink transport block can be received with an error probability not exceeding a predetermined probability P.

The indicator may include a CQI statistical metric generated based on one or more of the CQI values. The CQI statistical metric may include an average of the CQI values, a maximum of the CQI values, a median of the CQI values, a measure of variation of the CQI values, such as a standard deviation or variance of the CQI values and/or a CQI variation index that represents variation of the CQI values.

The method may further include generating a statistical spectral efficiency, SE, value by multiplying a modulation order and a code rate in a CQI table, and mapping the statistical SE value to a CQI value.

The statistical SE value may include a mean, median, standard deviation and/or variances of SE values generated from the CQI table.

The statistical SE value may be calculated based on a signal to interference plus noise, SINR, value or a bit per second, BPS, value.

Mapping the statistical SE value to the CQI value may include finding a largest SE value, SE', in the CQI table that is smaller than the statistical SE value, and finding the statistical CQI value by locating the CQI value that corresponds to SE' using the CQI table.

The method of any previous Claim, wherein the CSI report includes multiple rank indicator, RI, and/or precoding matrix indicator, PMI, and associated CQI values.

The CSI report may include a probability and/or frequency value that indicates a probability and/or frequency value associated with each reported RI and/or PMI.

The indicator may include a mean or median CQI value and the CSI report may include a first CSI report, the method further comprising generating a measure of variation of the CQI values and transmitting the measure of variation of the CQI values in a second CSI report.

The CQI statistical metric may be conditioned on previously reported precoding matrix indicator, PMI, rank indicator, RI, CQI, CRS-RS resource indicator, CRI, layer indicator, LI, and/or SS/PBCH resource block indicator, SSBRI, values. The CQI statistical metric may include a variation of a previously reported CQI statistical metric. The CQI statistical metric may be reported for a configured percentile of distribution of the channel quality. The CQI statistical metric may be computed based on demodulation reference signals included in data transmissions.

The channel measurement may include a measurement on a measurement resource in a downlink channel. The measurement resource may carry a downlink reference signal.

The interference measurement may be performed on a measurement resource assigned by the network node.

The CSI report may include a channel quality indicator, CQI, value based on the statistical measure, wherein the CQI value may be constructed based on the quality measures and a configured time duration between the measurements and when the CQI value should be applied. The time duration may be fixed, configured via radio resource control, and/or signaled in a CSI request.

A user equipment, UE, according to the claimed invention, is configured to perform operations including performing a channel measurement on a measurement resource for channel measurement within a time interval of length prs, performing periodic interference measurements on measurement resources within the time interval, wherein the periodic interference measurements are taken according to a period of length pim, where pim < prs, for each interference measurement, determining quality values associated with the interference measurement and the channel measurement, determining a statistical measure based on the quality values, and transmitting the statistical measure to a network node in a channel state information, CSI, report.

A user equipment, UE according to the claimed invention, includes a processing circuit, a transceiver coupled to the processing circuit, and a memory coupled to the processing circuit, wherein the memory may include computer readable program instructions that, when executed by the processing circuit, cause the UE to perform operations including performing a channel measurement on a measurement resource for channel measurement within a time interval of length prs, performing periodic interference measurements on measurement resources within the time interval, wherein the periodic interference measurements are taken according to a period of length pim, where pim < prs, for each interference measurement, determining quality values associated with the interference measurement and the channel measurement, determining a statistical measure based on the quality values, and transmitting the statistical measure to a network node in a channel state information, CSI, report.

A method of operating a network node according to the claimed invention includes configuring a user equipment, UE, to perform a channel measurement on a channel measurement resource within a time interval of length prs, configuring the UE to perform periodic interference measurements on measurement resources within the time interval, wherein the periodic interference measurements are taken according to a period of length pim, where pim < prs, configuring the UE to determine, for each interference measurement, a quality value associated with the interference measurement and the channel measurement, configuring the UE to determine a statistical measure based on the quality values, and receiving the statistical measure from the UE in a channel state information, CSI, report.

The quality measure may include one or more of a channel quality indicator, CQI, symbol information, a Signal-to-Interference-and-Noise Ratio, SINR, and a spectral efficiency, SE.

The statistical measure may include one or more of a maximum value, a minimum value, a mean, a variance, a standard deviation and a percentile of distribution.

The method may further include configuring the UE, for each interference measurement within the time interval, to determine a channel quality indicator, CQI, value associated with the interference measurement, wherein the CSI report includes an indicator based on one or more of the CQI values.

The method may further include transmitting a reference signal to the UE via a downlink channel, and receiving the CSI report from the UE.

The indicator may include one or more of the CQI values.

The indicator may include a highest one of the CQI values for which a downlink transport block can be received with an error probability not exceeding a predetermined probability P.

The indicator may include a CQI statistical metric generated based on one or more of the CQI values. The CQI statistical metric may include an average of the CQI values, a maximum of the CQI values, a median of the CQI values, a measure of variation of the CQI values, such as a standard deviation or variance of the CQI values and/or a CQI variation index that represents variation of the CQI values. The measure of variation may include a standard deviation or variance of the CQI values. The measure of variation may include a CQI variation index that represents variation of the CQI values.

The method may further include configuring the UE to generate a statistical spectral efficiency, SE, value by multiplying a modulation order and a code rate in a CQI table, and configuring the UE to map the statistical SE value to a CQI value.

The statistical SE value may include a mean, median, standard deviation and/or variances of SE values generated from the CQI table.

The statistical SE value may be calculated based on a signal to interference plus noise, SINR, value or a bit per second, BPS, value.

Mapping the statistical SE value to the CQI value may include finding a largest SE value, SE', in the CQI table that may be smaller than the statistical SE value, and finding the statistical CQI value by locating the CQI value that corresponds to SE' using the CQI table.

The CSI report includes multiple rank indicator, RI, and/or precoding matrix indicator, PMI, and associated CQI values.

The CSI report includes a probability and/or frequency value that indicates a probability and/or frequency value associated with each reported RI and/or PMI.

The indicator may include a mean or median CQI value and the CSI report may include a first CSI report, the method further comprising generating a measure of variation of the CQI values and transmitting the measure of variation of the CQI values in a second CSI report.

The CQI statistical metric may be conditioned on previously reported precoding matrix indicator, PMI, rank indicator, RI, CQI, CRS-RS resource indicator, CRI, layer indicator, LI, and/or SS/PBCH resource block indicator, SSBRI, values.

The CQI statistical metric may include a variation of a previously reported CQI statistical metric. The CQI statistical metric may be reported for a configured percentile of distribution of the channel quality. The CQI statistical metric may be computed based on demodulation reference signals included in data transmissions.

A network node according to the claimed invention is configured to perform a method including configuring a user equipment, UE, to perform a channel measurement on a channel measurement resource within a time interval of length prs, configuring the UE to perform periodic interference measurements on measurement resources within the time interval, wherein the periodic interference measurements are taken according to a period of length pim, where pim < prs, configuring the UE to determine, for each interference measurement, a quality value associated with the interference measurement and the channel measurement, configuring the UE to determine a statistical measure based on the quality values, and receiving the statistical measure from the UE in a channel state information, CSI, report.

A network node according to the claimed invention includes a processing circuit, a transceiver coupled to the processing circuit, and a memory coupled to the processing circuit. The memory includes computer readable program instructions that, when executed by the processing circuit, cause the network to perform operations of configuring a user equipment, UE, to perform a channel measurement on a channel measurement resource within a time interval of length prs, configuring the UE to perform periodic interference measurements on measurement resources within the time interval, wherein the periodic interference measurements are taken according to a period of length pim, where pim < prs, configuring the UE to determine, for each interference measurement, a quality value associated with the interference measurement and the channel measurement, configuring the UE to determine a statistical measure based on the quality values, and receiving the statistical measure from the UE in a channel state information, CSI, report.

BRIEF DESCRIPTION OF THE DRAWINGS

**Figure 1** illustrates UE measurement configuration and reporting according to some embodiments.
**Figure 2** is a flowchart that illustrates operations of a user equipment node according to the claimed invention.
**Figure 3** is a flowchart that illustrates operations of a network node according to the claimed invention.
**Figure 4** illustrates an example in which statistical CSI is conditioned last reported PMI and RI.
**Figure 5** illustrates an example of relative CSI reference resource with configured reference TBS and reference time allocation.
**Figure 6** is a flowchart that illustrates operations of a user equipment node according to non-claimed embodiments.
**Figure 7** is a flowchart that illustrates operations of a network node according to non-claimed embodiments.
**Figure 8** illustrates an example of relative CSI reference resource with sub-slot granularity and limited frequency range due to channel quality.

**Figure 9** is a flowchart that illustrates operations of a user equipment node according to non-claimed embodiments.
**Figure 10** is a flowchart that illustrates operations of a user equipment node according to non-claimed embodiments.
**Figure 11** is a flowchart that illustrates operations of a network node according to non-claimed embodiments.
**Figure 12** is a flowchart that illustrates operations of a user equipment node according to non-claimed embodiments.
**Figure 13** is a flowchart that illustrates operations of a network node according to non-claimed embodiments.
**Figure 14** is a block diagram illustrating a network node according to some embodiments of the inventive concepts.
**Figure 15** is a block diagram illustrating a user equipment node according to some embodiments of the inventive concepts.
**Figure 16** is a block diagram of a wireless network in accordance with some embodiments;
**Figure 17** is a block diagram of a user equipment in accordance with some embodiments
**Figure 18** is a block diagram of a virtualization environment in accordance with some embodiments;
**Figure 19** is a block diagram of a telecommunication network connected via an intermediate network to a host computer in accordance with some embodiments;
**Figure 20** is a block diagram of a host computer communicating via a base station with a user equipment over a partially wireless connection in accordance with some embodiments;
**Figure 21** is a block diagram of methods implemented in a communication system including a host computer, a base station, and a user equipment in accordance with some embodiments;
**Figure 22** is a block diagram of methods implemented in a communication system including a host computer, a base station, and a user equipment in accordance with some embodiments;
**Figure 23** is a block diagram of methods implemented in a communication system including a host computer, a base station, and a user equipment in accordance with some embodiments; and
**Figure 24** is a block diagram of methods implemented in a communication system including a host computer, a base station, and a user equipment in accordance with some embodiments.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

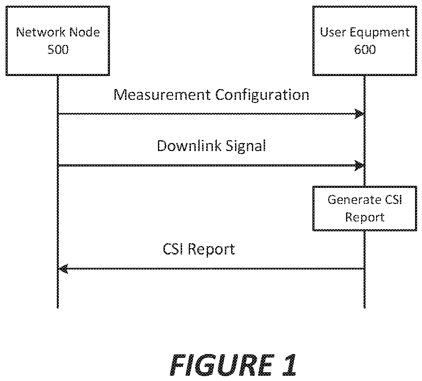

CSI reporting by a UE is illustrated in **Figure 1**. As shown therein, a network node 500, such as a gNB, generates and transmits a measurement configuration to a UE 600. The measurement configuration may define what measurements the UE should take and the format and timing of CSI reports based on the measurements. The network node 500 transmits a downlink signal to the UE 600 on a downlink channel, such as a PDSCH. The downlink signal may include one or more reference signals, such as channel state information reference signals (CSI-RS), demodulation reference signals (DMRS), etc. The UE 600 performs measurements on the downlink signal and generates a CSI report based on the measurements. The UE 600 transmits the CSI report to the network node 500 on an uplink channel.

As noted above, in NR the CSI (Channel State Information) may consist of one or more of:

- CQI: Channel Quality Indicator
- PMI: Pre-coding Matrix Indicator
- CRI: CSI-RS Resource Indicator
- LI: Layer Indicator
- SSBRI: SS/PBCH Block Resource Indicator
- L1-RSRP

The precise method for determining CSI to be reported is not specified in the current standard (except for requirements and conformance testing) and is up to UE implementation. However, the specification states (Section 5.2.1.4 of [1]):

- LI shall be calculated conditioned on the reported CQI, PMI, RI and CRI
- CQI shall be calculated conditioned on the reported PMI, RI and CRI

- PMI shall be calculated conditioned on the reported RI and CRI
- RI shall be calculated conditioned on the reported CRI.

The present disclosure focuses on PMI, RI and CQI for a specific CRI. A typical method by the UE would be to determine PMI, RI and CQI such that the sum of CSI reference resource PDSCH transport block sizes indicated via CSI is maximized. One common way to do that is to determine the SINR (Signal-to-Interference-and-Noise Ratio) based on one or more channel estimates H determined from channel measurements on CSI-RS and one or more interference and noise covariance matrices $Q$ determined from CSI-RS and/or CSI-IM measurement resources. For a MMSE (Minimum-Mean-Square-Error) receiver the SINR for layer $l$ of a pre-coder $P$ can be determined as:

$$R = (HPP^*H^* + Q)$$

$$W = P^*H^*R^{-1}$$

$$Q_x = I - WHP + WQW^*$$

$$SINR_l(P) = \frac{([WHP]_{l,l})^2}{[Q_x]_{l,l}}$$

In the above formulas * indicates the Hermitian conjugate and $[.]_{1,1}$ denotes the 1-th diagonal element.

The SINR per layer can be mapped to a Bits-Per-Symbol (BPS) value (usually referred to as mutual information) specifying how many information bits each modulation symbol can carry given a certain error rate. Summing the BPS values over the layers, the number of bits per symbol that the pre-coder $P$ supports can be obtained. To report RI, PMI and CQI, the UE would typically loop through all pre-coders in a pre-coder codebook to determine the pre-coder that gives the highest sum of BPS. From the best pre-coder in the codebook, the RI and PMI can be obtained and the CQI may be a quantized measure of average BPS value of the associated layers.

The above only shows on a high level how a UE may determine CSI and there are different methods and computation optimizations that a UE can use in a given implementation. However, it is observed that if the pre-coder codebook is large, then the task of determining CSI may be a challenging computation task for the UE, since the calculations involve matrix operations (including computationally expensive matrix multiplication and inverse operations).

The scheduler and link adapter in the gNB has the task of selecting a transport format consisting of allocation, number of layers, modulation and coding scheme for a PDSCH transmission based on reported CSI from the UE. For URLLC, this can be a challenging task due to the high reliability requirements, especially if the transport format also should be spectrally efficient. Since the PDSCH transmission occurs later than when the CSI was measured, the scheduler and link adapter must predict the SINR at transmission based on a "reported" SINR that can be determined from reported CSI. One such prediction typically used is that predicted SINR equals the "reported" SINR. This may work quite well in cases when transmissions can be "saved" by HARQ re-transmissions. For URLLC, the latency requirement puts a limit on the number of re-transmissions that can be done to be able to meet the requirement and the reliability requirement puts a limit on the probability that the data could not be correctly decoded within the limit on number of (re-)transmissions. For URLLC, the use of the "reported" SINR $SINR_{rep}$ as a prediction $SINR_{pred}$ of the SINR at the PDSCH transmission can hence lead to a situation in which the requirements cannot be fulfilled.

If the gNB configures the UE without time-restriction on the channel and interference measurements, the UE may report CSI filtered over several time instances. When gNB assumes that $SINR_{pred} = SINR_{rep}$, this can lead to better results since channel/interference peaks and dips are "filtered away." However, precisely how the UE determines/filters the CSI is not known, which makes it difficult to judge how much of peaks and dips are "filtered away." An alternative could be to configure the UE with a time-restriction and let the gNB use statistical methods to better predict the SINR at the time of transmissions. This method has the drawback that it takes time to obtain CSI samples to build the statistics. Another drawback is that the channel may vary rather slowly but interference can change rapidly, in which case the CSI reporting needs to be configured to occur frequently to capture the interference variations which induce control channel overhead.

Some embodiments described herein provide for reporting of statistical information of channel and/or interference variations. Such reports may improve spectral efficiency, since the scheduler and link adapter can obtain better estimates as to what part in the CSI is predictable and what part is non-predictable.

CSI Statistics Report For Multiple Interference Measurements according to the claimed invention

According to the claimed invention, the UE is configured with a periodic measurement resource (for CSI-RS) for channel measurements with period $p_{rs}$ and a periodic measurement resource (for CSI-IM) for interference measurement with period $p_{im}$ where $p_{im} < p_{rs}$. For simplicity, it may be assumed that UE is configured to report CSI once per channel measurement. If $p_{im} = p_{rs}/n$ for a positive integer $n$, then for each channel measurement there are $n$ interference measurements since the last CSI report. For each of the interference measurements, the UE may determine a highest $CQI_i, i = 0, ... , n - 1$ for which a PDSCH transport block on the CSI reference resource can be received with an error probability not exceeding a value $P$ (for example, 10% or $10^{-5}$).

In one embodiment, the UE may report all, or a subset of the individual CQI indices corresponding to different interference measurements.

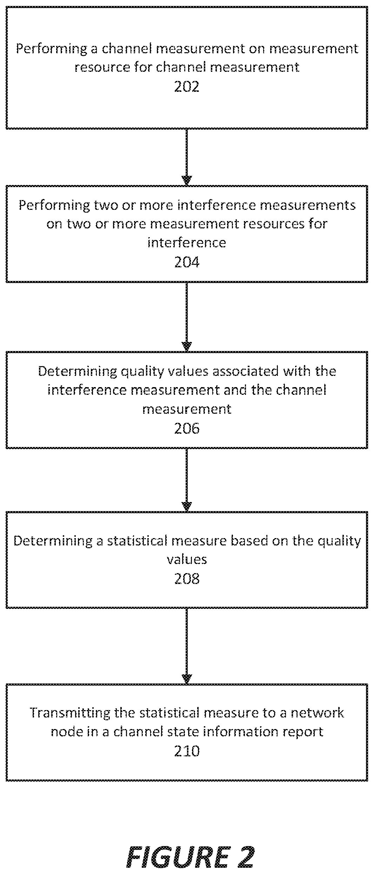

Accordingly referring to **Figure 2**, a method of operating a user equipment, UE, according to the claimed invention includes performing (202) a channel measurement on a measurement resource for channel measurement, performing (204) two or more interference measurements on two or more measurement resources for interference measurement. For each interference measurement, the UE determines (206) a quality value associated with the interference measurement and the channel measurement. The UE determines (208) a statistical measure based on the quality values, and transmits (210) the statistical measure to a network node in a channel state information, CSI, report.

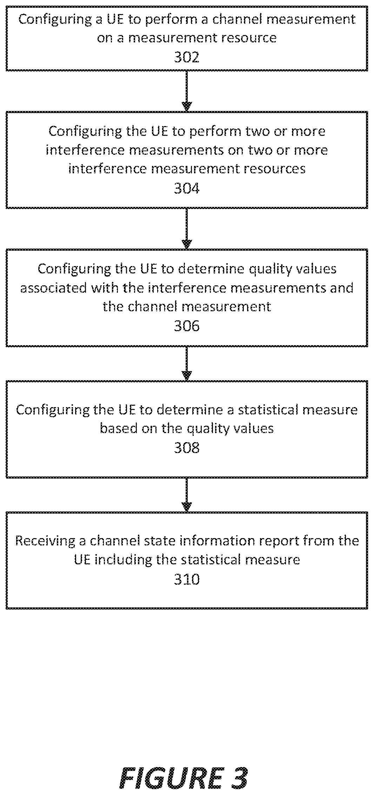

The quality measure may include one or more of a channel quality indicator, CQI, symbol information, a Signal-to-Interference-and-Noise Ratio, SINR, and a spectral efficiency, SE. The statistical measure may include one or more of a maximum value, a minimum value, a mean, a variance, a standard deviation and a percentile of distribution. Referring to **Figure 3**, a method of operating a network node according to the claimed invention is illustrated. The method includes configuring (302) a user equipment, UE, to perform a channel measurement on a channel measurement resource and configuring (304) the UE to perform two or more interference measurements on two or more measurement resources for interference measurement. The network node configures (306) the UE to determine, for each interference measurement, a quality value associated with the interference measurement and the channel measurement, and configures (308) the UE to determine a statistical measure based on the quality values. The network node then receives (310) the statistical measure from the UE in a channel state information, CSI, report.

The quality measure includes one or more of a channel quality indicator, CQI, symbol information, a Signal-to-Interference-and-Noise Ratio, SINR, and a spectral efficiency, SE. The statistical measure includes one or more of a maximum value, a minimum value, a mean, a variance, a standard deviation and a percentile of distribution. Methods for Calculation of CSI statistics

Method A. Calculation based on a sequence of $CQI_i$

In some examples of this embodiment, the UE reports a mean or median CQI, i.e.

$$m_{mean} = round(mean(\{CQI_0, ... , CQI_{n-1}\}))$$

or

$m_{median}$ =median($\{CQI_0, .... , CQI_{n-1}\}$), together with CQI variation measure $s$ in same CSI report. Here, the function round(.) is used as an example to obtain a valid CQI value, where the CQI values are integers, which are used as indices to look up a set of {modulation order, code rate} values. Other functions can be used to obtain valid CQI values, for example, floor(.) or ceil(.).

In some embodiments the UE reports the mode of the individual CQI indices corresponding to different interference measurements.

The CQI variation measure may, for example, be expressed as:

$$s_{max} = \max\{|CQI_i - m| : i = 0, ... , n - 1\}$$

$s_{max} = \sigma\{CQI_i : i = 0, ... , n - 1\}$, i.e., the standard deviation (or variance) of $CQI_i$.
$s_{max} = g(\sigma\{CQI_i : i = 0, ... , n - 1\})$, where the function g(.) maps non-integer values to integer values, for example, round(.), floor(.), ceil(.).

In the above, the variable $m$ is typically set to $m_{mean}$, but it can be set to $m_{median}$ as well to reduce computation. In some examples of this embodiment the mean/median $m$ and/or variation $s$ measures are reported with decimals. For example, the function g(.) may be rounded, floored or ceiled to a value with one decimal.

In some examples of this embodiment, the value range for reported mean/median or variation measure may be configurable with, for example, $R_{min}$ and $R_{max}$. For example, if e.g. 3 bits are used to report the CQI variation measure *s* a CQI variation index may, for example, be defined according to **Table 1** below.

**Table 1 - CQI Variation Index**

| CQI variation index | Meaning $\Delta = \frac{R_{max} - R_{min}}{6}$ |
|---|---|
| 0 | $s \le R_{min}$ |
| 1 | $R_{min} < s \le R_{min} \mid \Delta$ |
| 2 | $R_{min} \mid \Delta < s \le R_{min} \mid 2\Delta$ |
| 3 | $R_{min} \mid 2\Delta < s \le R_{min} \mid 3\Delta$ |
| 4 | $R_{min} \mid 3\Delta < s < R_{min} \mid 4\Delta$ |
| 5 | $R_{min} \mid 4\Delta < s \le R_{min} \mid 5\Delta$ |
| 6 | $R_{min} \mid 5\Delta < s \le R_{min} \mid 6\Delta$ |
| 7 | $s > R_{min} + 6\Delta$ |

Method B. Calculation based on a sequence of $SE_i$

In some examples of this embodiment, the UE reports a statistical CQI value by mapping a statistical spectral efficiency (SE) value to a CQI value using the relevant CQI table. The CQI table can be a table constructed for target a BLER of, for example 1e-1 or 1e-5.

A spectral efficiency value, $SE_i$, is denoted corresponding to $CQI_i, i = 0, \ldots, n$. The spectral efficiency value is obtained by multiplying the modulation order and code rate in the CQI table. For example, spectral efficiency values are listed in last column of the CQI tables in Table 5.2.2.1-2, Table 5.2.2.1-3, and Table 5.2.2.1-4 of [1].

The statistical SE values may be one or more of the following:

- $$SE_{mean} = mean(\{SE_0, \ldots, SE_{n-1}\}))$$

- $$SE_{median} = median(\{SE_0, \ldots, SE_{n-1}\}))$$

- $$SE_{dev} = \max \{|SE_i - SE_{mean}| : i = 0, \ldots, n-1\}$$

- $$SE_\sigma = \sigma(\{SE_0, \ldots, SE_{n-1}\})),$$

 i.e., the standard deviation of $CQI_i$.

Then the statistical CQI index is obtained by mapping the statistical SE value(s) to the CQI using a CQI table. The mapping can be performed by finding the largest SE value, SE', in the CQI table that is smaller than the statistical SE value, and then finding the statistical CQI value by locating the CQI value that corresponds to SE' using the CQI table.

In some examples of this embodiment, the mean/median and/or variation measures are calculated based on more direct values, such as SINR or BPS values. For example, mean and variation measure could be quantized values of mean and standard deviation of *n* BPS values corresponding *n* pairs of channel and interference measurements.

In some examples, the UE reports enhanced CSI comprising multiple RI and/or PMI and associated mean/median and/or variation CQI, i.e. set of sets (RI,P.MI, $CQI_{mean}$, $CQI_{variance}$}. In some such examples, a probability/frequency value is also reported indicating a probability/frequency value associated with each reported RI and/or PMI.

Non-claimed configurations for CSI statistics report

In other examples, the mean or median CQI and the CQI variation measure are provided in different reports.

For example, the mean or median CQI may be provided in legacy CSI reporting, while the CQI variation measure may be sent as a MAC CE (MAC Control Element).

Since CQI is conditioned on a reported PMI and RI value, it may be computationally heavy for a UE to determine mean/median/variation CQI measures for each PMI and RI. To reduce the computation effort in UE, an alternative embodiment is provided in which the mean/median CQI and CQI variation measure is conditioned on the last reported PMI and RI values. In an alternative embodiment, the channel estimate used in CQI computations may also be based on the channel estimate(s) used to determine last reported PMI and RI.

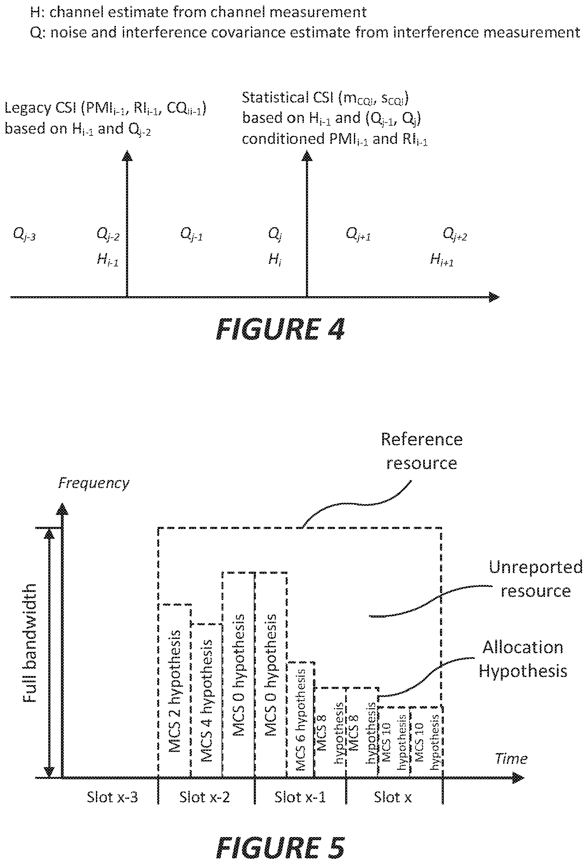

**Figure** 4 illustrates an example in which statistical CSI is conditioned last reported PMI and RI and wherein the channel estimate is the estimate used to determine the PMI and RI.

In some embodiments, the assumed mean/median CQI is last reported CQI using legacy methods and wherein only the variation CQI measure is sent be UE.

In some embodiments, the UE reports a mean/median and/or a variation CQI conditioned on one or more out of reported CQI, RI, PMI, CRI, LI and SSBRI.

The mean/median CQI and/or variation CQI can be sent on PUCCH and/or PUSCH, carried in a MAC CE or higher-layer signaling.

In some embodiments, the variation of channel quality is reported for a configured percentile of distribution of the channel quality.

In some embodiments is the variation of channel quality instead computed on DMRS of received data transmissions.

In some embodiments, the variation is related to a distribution (e.g. normal distribution) and relates the variation to a signaled standard deviation for the distribution with signaled mean.

In some embodiments, the variation is expressed in units of SNR, interference power, or mutual information - rather than in units of CQI values.

In some embodiments, the variation is calculated for use only internally in the UE, and only the resulting CQI value is reported. This CQI value is then dependent on the calculated variation. Typically, a large variation will lead to a lower reported CQI value, to reflect a more conservative CQI value in uncertain environments. How much the reported CQI value will be reduced will be dependent on the variation, as well as the distance in time between estimates of channel, interference and variation, to the time instant when the CQI will be applied in the following scheduling. This time distance can be fixed, or RRC-configured, or signaled in a CSI request.

In some embodiments, the enhanced CQI reporting is applied depending on the CSI-RS configuration. For example, the enhanced CQI report is applied when the CSI-RS is configured as Periodic CSI-RS or Semi-Persistent CSI-RS, but not Aperiodic CSI-RS. In this context, the enhanced CQI report refers to a reporting composed of mean-of-CQI, and/or median-of-CQI, and/or standard-deviation-of-CQI, in addition to the CQI value.

In some embodiments, the enhanced CQI reporting is applied depending on the triggering/activation of CSI reporting. For example, the enhanced CQI report is applied to aperiodic CSI Reporting, but not to periodic CSI reporting or semi-persistent CSI reporting.

In some embodiments, enhanced CQI reporting is applied to periodic CQI reporting such that mean-of-CQI and/or median-of-CQI and/or variance- or standard-deviation-of-CQI are reported with different periodicities. For example, mean-of-CQI and/or median-of-CQI may be reported with a period P1 and variance- or standard-deviation-of-CQI may be reported with a period $P2 > P1$.

In some embodiments, the enhanced CQI reporting may be applied depending on the target BLER value the report is for. For example, the enhanced CQI report may be applied for target BLER=1e-5, but not for target BLER=1e-1.

Non-claimed relative CSI Reference Resource

In some embodiments, a CSI reference resource in time and frequency can be defined with varying resource in time and frequency, even when only a single CSI feedback is provided. For example, **Figure** 5 illustrates an example of relative CSI reference resource with configured reference TBS and reference time allocation. In order to achieve this, the UE can be configured with a reference transport block size (TBS) and reference time allocation (e.g. 2, 4 or 7 OFDM symbols). The reference resource should be divided in time scale according to configured reference time allocation. Then for every time interval, the UE should derive a suitable modulation and coding scheme (MCS) to satisfy the required error probability target resulting to allocation hypothesis. After that, the MCS for every allocation hypothesis should be encoded into the CQI index, which can be processed according to embodiments described above and then reported.

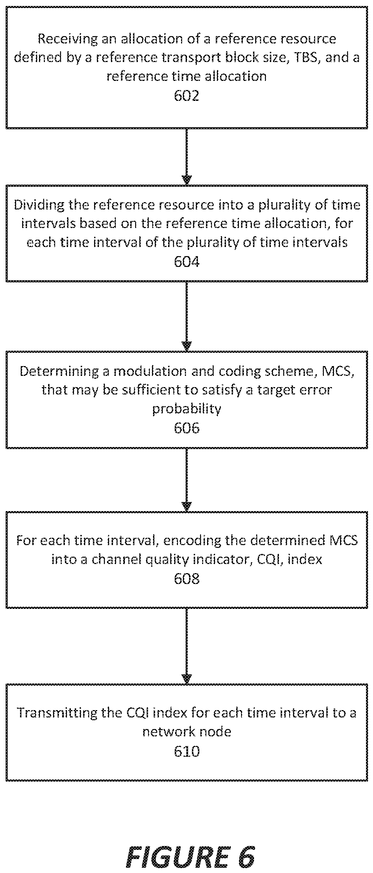

Accordingly, referring to **Figure 6**, a method of operating a user equipment, UE, according to further embodiments includes receiving (block 602) an allocation of a reference resource defined by a reference transport block size, TBS, and a reference time allocation, dividing (block 604) the reference resource into a plurality of time intervals based on the reference time allocation, for each time interval of the plurality of time intervals, determining (block 606) a modulation and coding scheme, MCS, that may be sufficient to satisfy a target error probability, for each time interval, encoding (block 608) the determined MCS into a channel quality indicator, CQI, index, and transmitting (block 610) the CQI index for each time interval to a network node.

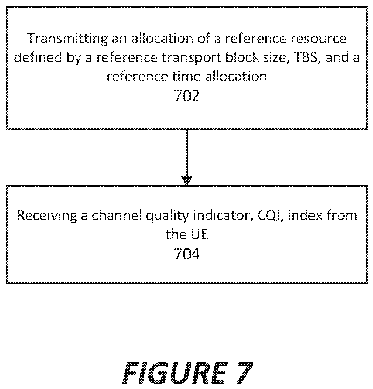

Referring to **Figure 7**, a method of operating a network node includes transmitting (block 702) to a user equipment, UE, an allocation of a reference resource defined by a reference transport block size, TBS, and a reference time allocation, and receiving (block 704) a channel quality indicator, CQI, index from the UE, wherein the CQI index may be generated by dividing the reference resource into a plurality of time intervals based on the reference time allocation, for each time interval of the plurality of time intervals, determining a modulation and coding scheme, MCS, that is sufficient to satisfy a target error probability, and for each time interval, encoding the determined MCS into the CQI index.

In another embodiment, placement of allocation hypothesis can be anchored in frequency to lowest or highest subcarrier in bandwidth or to specific subcarrier (configured offset in resource blocks) or to the best sub-band CQI in conventional CSI report.

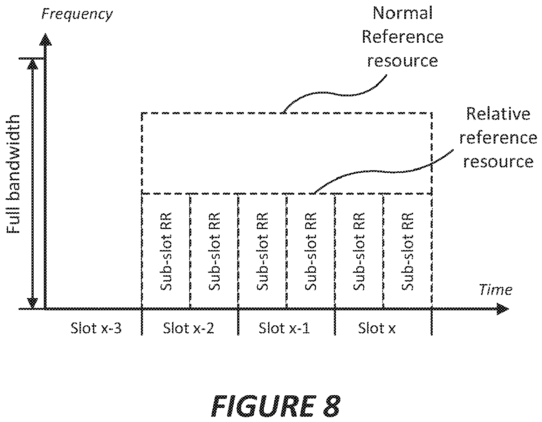

In another embodiment, to compute CSI feedback with the required error probability, the UE would need to evaluate the error probability for all potential placements of the provided sub-slot reference resources (sub-slot RR, see example in **Figure 8**). In some embodiments is the sizes of the sub-slot reference resources dependent on the quality of the channel, e.g. the amount of resources needed to receive a configurable, or fixed, number of bits within the error rate target.

**Figure 8** illustrates an example of relative CSI reference resource with sub-slot granularity and limited frequency range due to channel quality.

The approach illustrated in **Figure 8** provides an efficient reporting for narrowband allocations without the overhead of specifying the quality of each potential allocation. This can be motivated in scenarios where the URLLC packet size is considerably smaller than can be allocated in existing CSI reference time-frequency resource.

In another embodiment, placement of sub-slot RR can be anchored in frequency to lowest or highest subcarrier in bandwidth or to specific subcarrier (configured offset in resource blocks) or to the best sub-band CQI in conventional CSI report.

In some embodiments, the reporting includes a set of hypothesis resource assignments (e.g. for different DL semi persistent scheduling configurations), where the variation is reported for multiple or only the best hypothesis.

Non-claimed Configured Time Interval

In some embodiments, the configuration between a restricted and unrestricted time interval is extended with a configurable time interval. This could be independently configurable or be a direct function of the report period. In this embodiment, the UE computes a single CSI report such that the target block error rate can be achieved on average over the time period or over a sub-set of the time period. In a special case, the time period is only the last slot of the period. The estimation could consider one or multiple channel and/or interference measurements on CSI-RS. In some embodiments it may also consider other measurements impacting expected variance in the channel, such as doppler or speed estimates, interference and channel variations during data or control channel reception and other reference signals.

In some cases, the UE may skip some measurements on the configured CSI-RS to be used for statistical CSI. For example, UE may be configured to perform channel measurements on frequent CSI-RS resources in order to obtain accurate statistical CSI. In some conditions, e.g., static environment where the measurements on certain number of consecutive configured CSI-RS resources remain within a certain bound, the UE may skip some measurements or adjust the period for which the measurements are performed. Note that the change in measurements are done within the UE, and when done appropriately should not affect the quality and how the statistical CSI is reported.

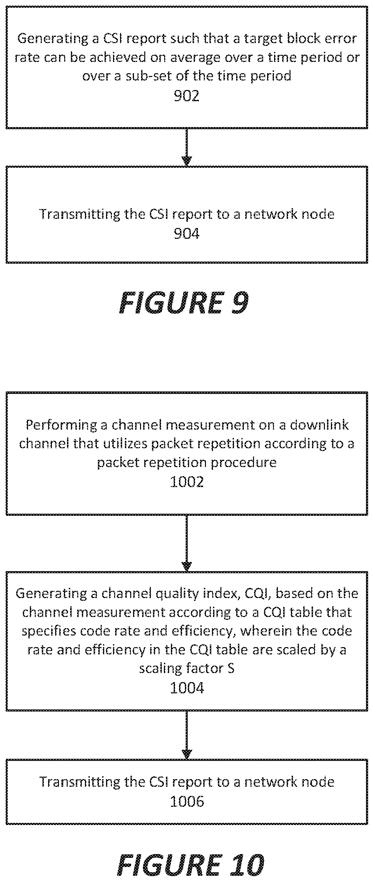

Accordingly, referring to **Figure 9**, a method of generating a channel state information, CSI report, according to some embodiments includes generating (block 902) a CSI report such that a target block error rate can be achieved on average over a time period or over a sub-set of the time period, and transmitting (block 904) the CSI report to a network node. The time period may include a last slot of a reporting period covered by the CSI report.

Non-claimed CSI Reporting That Takes Into Account Packet Repetition

To achieve high reliability of a URLLC packet, packet repetition (aka, aggregation) is used to improve the performance. For example, in Rel-15 NR, the PDSCH can be provided with aggregation factor of AF = 1,2,4, or 8. When a AF value greater than 1 (e.g., AF=8) is applied, the PDSCH is repeated consecutively in time AF times. This effectively changes the SNR the packet experiences, and makes the existing CQI table difficult to use, since the existing NR CQI table assumes one PDSCH transmission only.

Moreover, in NR, the packet may be transmitted using a mini-slot instead of a slot, where the mini-slot may have duration of L = 2, 4, or 7 symbols typically.

Thus, the CQI table and CQI reference resources should be enhanced to account for both mini-slot resource allocation and packet aggregation.

In one example, a scaling factor S is applied to the CQI table, as illustrated in **Table 2** below. The scaling factor S can be defined as:

$$S = \frac{L_{CSI} * AF_{CSI}}{12}$$

where $L_{CSI}$ is the number of symbols allocated to a single transmission occasion of the PDSCH (i.e., do not include repetitions of the PDSCH), $AF_{CSI}$ is the aggregation factor. For the purpose of CSI reporting, both the $L_{CSI}$ and $AF_{CSI}$ may be RRC configured, which may be different from the actual duration and aggregation factor an actual PDSCH is assigned with.

Accordingly, referring to **Figure 10**, a method of generating a channel state information, CSI, report, by a user equipment, UE, according to some embodiments includes performing (block 1002) a channel measurement on a downlink channel that utilizes packet repetition according to a packet repetition procedure, generating (block 1004) a channel quality index, CQI, based on the channel measurement according to a CQI table that specifies code rate and efficiency, wherein the code rate and efficiency in the CQI table are scaled by a scaling factor S, where S may be defined as

$$S = \frac{L_{CSI} * AF_{CSI}}{12}$$

where $L_{CSI}$ may be a number of symbols allocated to a single transmission occasion of the downlink channel and $AF_{CSI}$ may be an aggregation factor that represents a number of packet repetitions, and transmitting (1006) the CSI report to a network node.

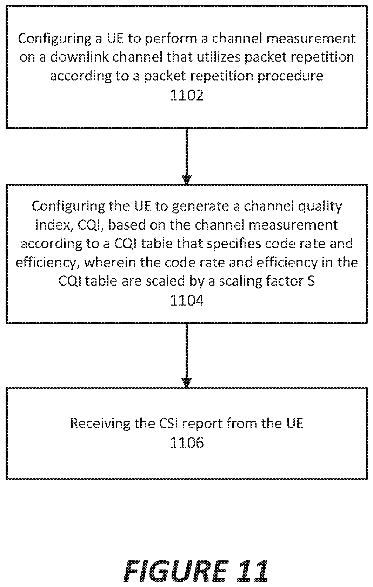

Referring to **Figure 11**, a method of operating a network node according to further embodiments includes configuring (block 1102) a user equipment, UE, to perform a channel measurement on a downlink channel that utilizes packet repetition according to a packet repetition procedure, configuring (block 1104) the UE to generate a channel quality index, CQI, based on the channel measurement according to a CQI table that specifies code rate and efficiency, wherein the code rate and efficiency in the CQI table are scaled by a scaling factor S, where S may be defined as

$$S = \frac{L_{CSI} * AF_{CSI}}{12}$$

where $L_{CSI}$ is a number of symbols allocated to a single transmission occasion of the downlink channel and $AF_{CSI}$ may be an aggregation factor that represents a number of packet repetitions, and receiving (1106) a CSI report from the UE including the CQI index.

In a version of this embodiment, the CSI reference resource is repeated according to slot aggregation or rel. 16 repetition with the number of repetitions being either RRC configured or signaled to the UE. The number of symbols used for data in the reference resource is allowed to vary. The redundancy versions for different repetitions or aggregated slots can also vary. One example is that the aggregated slots use RVs cyclically in the order (0, 2, 3 1). The UE then reports CQI index using the release 15 definitions.

**Table 2. Enhanced 4-bit CQI Table 3**

| CQI index | modulation | code rate x 1024 x S | efficiency x S |
|-----------|------------|----------------------|----------------|
| 0 | out of range | | |
| 1 | QPSK | 30 | 0.0586 |
| 2 | QPSK | 50 | 0.0977 |
| 3 | QPSK | 78 | 0.1523 |
| 4 | QPSK | 120 | 0.2344 |
| 5 | QPSK | 193 | 0.3770 |
| 6 | QPSK | 308 | 0.6016 |

(continued)

| CQI index | modulation | code rate x 1024 x S | efficiency x S |
|---|---|---|---|
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

Non-Claimed Procedure for Periodical URLLC Transmissions

For a periodical URLLC data, the activation DCI equips with MCS. However, for URLLC with extreme reliability, the DCI may indicate a CSI procedure (DL reference and UL reporting) periodicity. The periodicity can be same as of the URLLC transmission period, e.g., provisioning of CSI (reference and reporting) signals in every period, or the periodicity can be large, e.g., the reference and reporting signals can occur after multiple periods of data transmission. After each reporting, the gNB can choose to select an appropriate MCS. The new MCS can be indicated in an absolute or relative manner (e.g., the MCS changes with respect to last data transmission or with respect to MCS in DCI activation) before or in the beginning of data transmission period. Further in DCI, the gNB can indicate either CSI reference resource or CSI reporting resource. In such cases, if one the signal resource is indicated, then the other can be determined in number of ways. For example another signal resource can be allocated in a relative pre-meditated manner with respect to the indicated resource. For example, CSI reporting resource can be indicated with respect to first repetition of transmission (- X OS in time domain) or + Y OS with respect to already defined CSI synchronization signals, etc.

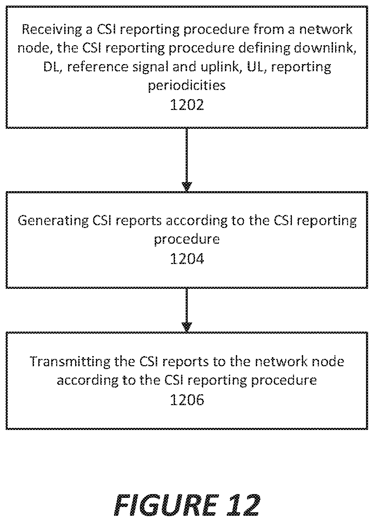

Referring to **Figure 12**, a method of generating a channel state information, CSI, report, by a user equipment, UE, includes receiving (block 1202) a CSI reporting procedure from a network node, the CSI reporting procedure defining downlink, DL, reference signal and uplink, UL, reporting periodicities, generating (block 1204) CSI reports according to the CSI reporting procedure, and transmitting (block 1206) the CSI reports to the network node according to the CSI reporting procedure.

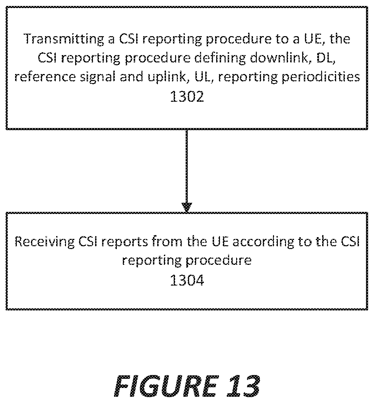

Referring to **Figure 13**, a method of operating a network node according to further embodiments includes transmitting (block 1302) a CSI reporting procedure to a user equipment, UE, the CSI reporting procedure defining downlink, DL, reference signal and uplink, UL, reporting periodicities, and receiving (block 1304) CSI reports from the UE, wherein the CSI reports were generated according to the CSI reporting procedure.

Non-claimed indication of Statistical CSI Reporting

In the above-described embodiments, methods for statistical CSI reporting and configurations of CSI reference resources are described. In this embodiment, methods are described to indicate to a UE that statistical CSI shall be reported. The indication may imply to the UE that multiple channel measurements are performed and statistical information in addition to the CSI are reported as described above. The statistical CSI reporting in the following embodiments may correspond to periodic or aperiodic CSI reporting.

Non-claimed dynamic Indication

In one embodiment, the gNB indicates to the UE that statistical CSI shall be reported based on how a DCI is transmitted.

In one version of the above embodiment, the gNB indicates to the UE that statistical CSI shall be reported using a field in the DCI with specific value corresponding to the statistical CSI request.

In one version of above embodiment, the gNB indicates to the UE that statistical CSI shall be reported using a specific DCI format containing a field for CSI request.

In one version of above embodiment, the gNB indicates to the UE that statistical CSI shall be reported using a specific CORESET or search space for which the PDCCH carrying DCI indicating a CSI request is transmitted.

In one version of above embodiment, the gNB indicates to the UE that statistical CSI shall be reported when the DCI indicating a CSI request is transmitted with CRC scrambled by a specific RNTI.

In another embodiment, the start of the time interval for which UE performs multiple channel measurements for statistical CSI reporting is a function of the time when the statistical CSI indication is detected.

Non-claimed semi-static configuration

In one embodiment, the UE shall report statistical CSI based on a higher layer configuration, for example, when a new RRC parameter corresponding to statistical CSI report is enabled.

Network Node and UE Configuration

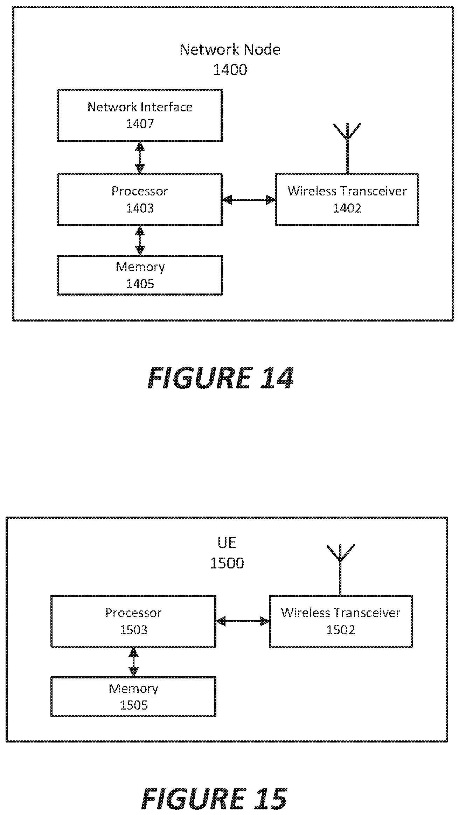

**Figure 14** is a block diagram illustrating elements of a network node 1400 of a communication system. The network node 1400 may implement a RAN node and/or a CN node in the communication system. For example, the network node 1400 may implement a gNodeB or eNodeB.

As shown, the network node may include a network interface circuit 1407 (also referred to as a network interface) configured to provide communications with other nodes (e.g., with other base stations, RAN nodes and/or core network nodes) of the communication network. The network node 1400 may also include a wireless transceiver circuit 1402 for providing a wireless communication interface with UEs. The network node 1400 may also include a processor circuit 1403 (also referred to as a processor) coupled to the transceiver circuit 1402 and the network interface 1407, and a memory circuit 1405 (also referred to as memory) coupled to the processor circuit. The memory circuit 1405 may include computer readable program code that when executed by the processor circuit 1403 causes the processor circuit to perform operations according to embodiments disclosed herein. According to other embodiments, processor circuit 1403 may be defined to include memory so that a separate memory circuit is not required.

As discussed herein, operations of the network node may be performed by processor 1403, the wireless transceiver circuit 1402 and/or the network interface 1407. For example, the processor 1403 may control the network interface 1407 to transmit communications through network interface 1407 to one or more other network nodes and/or to receive communications through network interface from one or more other network nodes. Moreover, modules may be stored in memory 1405, and these modules may provide instructions so that when instructions of a module are executed by processor 1403, processor 1403 performs respective operations (e.g., operations discussed herein with respect to Example Embodiments).

**Figure 15** is a block diagram illustrating elements of a UE 1500 of a communication system. As shown, the UE may include a wireless transceiver circuit 1502 for providing a wireless communication interface with a network. The UE 1500 may also include a processor circuit 1503 (also referred to as a processor) coupled to the transceiver circuit 1502 and the wireless transceiver circuit 1502, and a memory circuit 1505 (also referred to as memory) coupled to the processor circuit. The memory circuit 1505 may include computer readable program code that when executed by the processor circuit 1503 causes the processor circuit to perform operations according to embodiments disclosed herein. According to other embodiments, processor circuit 1503 may be defined to include memory so that a separate memory circuit is not required.

As discussed herein, operations of the UE may be performed by processor 1503 and/or the wireless transceiver circuit 1502. For example, the processor 1503 may control the wireless transceiver circuit 1502 to transmit communications to a network node 500. Moreover, modules may be stored in memory 1505, and these modules may provide instructions so that when instructions of a module are executed by processor 1503, processor 1503 performs respective operations discussed herein.

Explanations are provided below for abbreviations that are mentioned in the present disclosure.

Abbreviation Explanation

| | |
|---|---|
| BLEP | Block Error Probability |
| BPS | Bits Per Symbol |
| CN | Core Network |
| CQI | Channel Quality Indicator |
| CRC | Cyclic Redundancy Check |
| CRI | CSI-RS Resource Indicator |

(continued)

| | |
|---|---|
| CSI | Channel State Information |
| CSI-RS | Channel State Information Reference Signal |
| DCI | Downlink Control Information |
| DL | Downlink |
| DMRS | Demodulation Reference Signal |
| eNB | E-UTRAN NodeB |
| E-UTRA | Evolved Universal Mobile Terrestrial Radio Access |
| E-UTRAN | Evolved Universal Mobile Terrestrial Radio Access Network |
| EPC | Evolved Packet Core |
| EPS | Evolved Packet System |
| gNB | gNodeB |
| HARQ | Hybrid Automatic Repeat Request |
| LI | Layer Indicator |
| LTE | Long Term Evolution |
| MCS | Modulation and Coding Scheme |
| MMSE | Minimum Mean Square Error |
| NG | Next Generation |
| NG-RAN node: | either a gNB or an ng-eNB. |
| NR | New Radio |
| PBCH | Physical Broadcast Channel |
| PDCCH | Physical Downlink Control Channel |
| PDSCH | Physical Downlink Shared Channel |
| PMI | Precoding Matrix Indicator |
| PUCCH | Physical Uplink Control Channel |
| PUSCH | Physical Uplink Shared Channel |
| QAM | Quadrature Amplitude Modulation |
| RAN | Radio Access Network |
| RAN node: | an eNB or NG-RAN node (either a gNB or an ng-eNB). |
| RAT | Radio Access Technology |
| RI | Rank Indicator |
| RLC | Radio Link Control |
| RNTI | Radio Network Temporary Identity |
| RR | Reference Resource |
| RRC | Radio Resource Control |
| RS | Reference Signal |
| RSRP | Reference Signal Received Power |
| SE | Spectral Efficiency |
| SINR | Signal to Interference Plus Noise Ratio |
| SSBRI | SS/PBCH Block Resource Indicator |
| SS | Synchronization Signal |
| S-SN | Source SN |
| TBS | Transport Block Size |
| UCI | Uplink Control Information |
| UE | User Equipment |
| UL | Uplink |
| URLLC | Ultra Reliable Low Latency Communication |

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

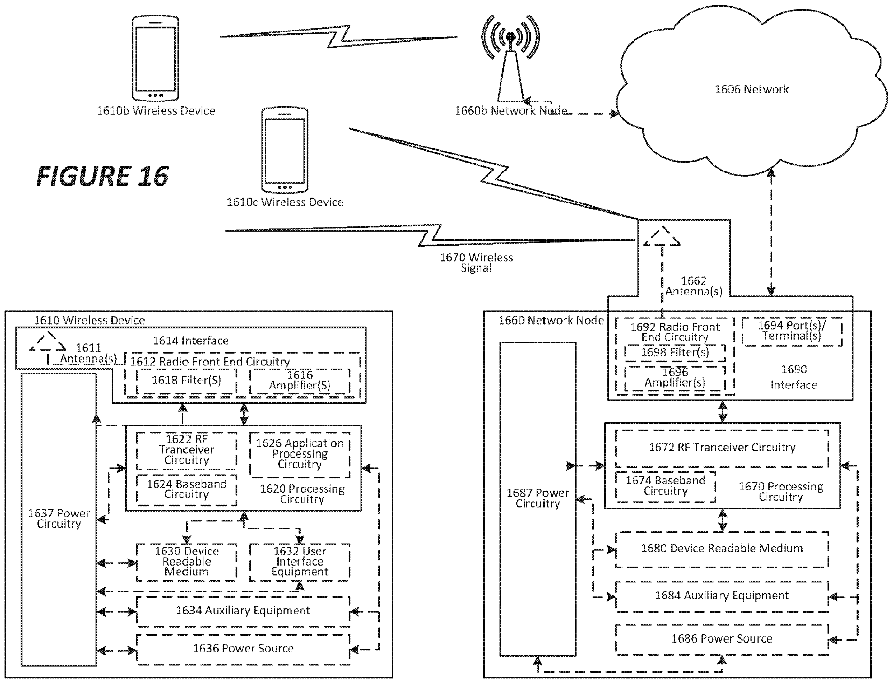

Figure 16: A wireless network in accordance with some embodiments.

Although the subject matter described herein may be implemented in any appropriate type of system using any suitable components, the embodiments disclosed herein are described in relation to a wireless network, such as the example wireless network illustrated in Figure 16. For simplicity, the wireless network of Figure 16 only depicts network 1606, network nodes 1660 and 1660b, and WDs 1610, 1610b, and 1610c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 1660 and wireless device (WD) 1610 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1606 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1660 and WD 1610 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 16, network node 1660 includes processing circuitry 1670, device readable medium 1680, interface 1690, auxiliary equipment 1684, power source 1686, power circuitry 1687, and antenna 1662. Although network node 1660 illustrated in the example wireless network of Figure 16 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1660 are depicted as single boxes located within a larger box, or nested within multiple boxes, in practice, a network node may comprise multiple different physical components that make up a single illustrated component (e.g., device readable medium 1680 may comprise multiple separate hard drives as well as multiple RAM modules).

Similarly, network node 1660 may be composed of multiple physically separate components (e.g., a NodeB component and a RNC component, or a BTS component and a BSC component, etc.), which may each have their own respective components. In certain scenarios in which network node 1660 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1660 may be configured to support multiple radio access technologies (RATs). In such embodiments, some components may be duplicated (e.g., separate device readable medium 1680 for the different RATs) and some components may be reused (e.g., the same antenna 1662 may be shared by the RATs). Network node 1660 may also include multiple sets of the various illustrated components for different wireless technologies integrated into network node 1660, such as, for example, GSM, WCDMA, LTE, NR, WiFi, or Bluetooth wireless technologies. These wireless technologies may be integrated into the same or different chip or set of chips and other components within network node 1660.

Processing circuitry 1670 is configured to perform any determining, calculating, or similar operations (e.g., certain obtaining operations) described herein as being provided by a network node. These operations performed by processing circuitry 1670 may include processing information obtained by processing circuitry 1670 by, for example, converting the obtained information into other information, comparing the obtained information or converted information to information stored in the network node, and/or performing one or more operations based on the obtained information or converted information, and as a result of said processing making a determination.

Processing circuitry 1670 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1660 components, such as device readable medium 1680, network node 1660 functionality. For example, processing circuitry 1670 may execute instructions stored in device readable medium 1680 or in memory within processing circuitry 1670. Such functionality may include providing any of the various wireless features, functions, or benefits discussed herein. In some embodiments, processing circuitry 1670 may include a system on a chip (SOC).

In some embodiments, processing circuitry 1670 may include one or more of radio frequency (RF) transceiver circuitry 1672 and baseband processing circuitry 1674. In some embodiments, radio frequency (RF) transceiver circuitry 1672 and baseband processing circuitry 1674 may be on separate chips (or sets of chips), boards, or units, such as radio units and digital units. In alternative embodiments, part or all of RF transceiver circuitry 1672 and baseband processing circuitry 1674 may be on the same chip or set of chips, boards, or units.

In certain embodiments, some or all of the functionality described herein as being provided by a network node, base station, eNB or other such network device may be performed by processing circuitry 1670 executing instructions stored on device readable medium 1680 or memory within processing circuitry 1670. In alternative embodiments, some or all of the functionality may be provided by processing circuitry 1670 without executing instructions stored on a separate or discrete device readable medium, such as in a hard-wired manner. In any of those embodiments, whether executing instructions stored on a device readable storage medium or not, processing circuitry 1670 can be configured to perform the described functionality. The benefits provided by such functionality are not limited to processing circuitry 1670 alone or to other components of network node 1660, but are enjoyed by network node 1660 as a whole, and/or by end users and the wireless network generally.

Device readable medium 1680 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1670. Device readable medium 1680 may store any suitable instructions, data or information, including a computer program, software, an application including one or more of logic, rules, code, tables, etc. and/or other instructions capable of being executed by processing circuitry 1670 and, utilized by network node 1660. Device readable medium 1680 may be used to store any calculations made by processing circuitry 1670 and/or any data received via interface 1690. In some embodiments, processing circuitry 1670 and device readable medium 1680 may be considered to be integrated.

Interface 1690 is used in the wired or wireless communication of signalling and/or data between network node 1660, network 1606, and/or WDs 1610. As illustrated, interface 1690 comprises port(s)/terminal(s) 1694 to send and receive data, for example to and from network 1606 over a wired connection. Interface 1690 also includes radio front end circuitry 1692 that may be coupled to, or in certain embodiments a part of, antenna 1662. Radio front end circuitry 1692 comprises filters 1698 and amplifiers 1696. Radio front end circuitry 1692 may be connected to antenna 1662 and processing circuitry 1670. Radio front end circuitry may be configured to condition signals communicated between antenna 1662 and processing circuitry 1670. Radio front end circuitry 1692 may receive digital data that is to be sent out to other network nodes or WDs via a wireless connection. Radio front end circuitry 1692 may convert the digital data into a radio signal having the appropriate channel and bandwidth parameters using a combination of filters 1698 and/or amplifiers 1696. The radio signal may then be transmitted via antenna 1662. Similarly, when receiving data, antenna 1662 may collect radio signals which are then converted into digital data by radio front end circuitry 1692. The digital data may be passed to processing circuitry 1670. In other embodiments, the interface may comprise different components and/or different combinations of components.

In certain alternative embodiments, network node 1660 may not include separate radio front end circuitry 1692, instead, processing circuitry 1670 may comprise radio front end circuitry and may be connected to antenna 1662 without separate radio front end circuitry 1692. Similarly, in some embodiments, all or some of RF transceiver circuitry 1672 may be considered a part of interface 1690. In still other embodiments, interface 1690 may include one or more ports or terminals 1694, radio front end circuitry 1692, and RF transceiver circuitry 1672, as part of a radio unit (not shown), and interface 1690 may communicate with baseband processing circuitry 1674, which is part of a digital unit (not shown).

Antenna 1662 may include one or more antennas, or antenna arrays, configured to send and/or receive wireless signals. Antenna 1662 may be coupled to radio front end circuitry 1690 and may be any type of antenna capable of transmitting and receiving data and/or signals wirelessly. In some embodiments, antenna 1662 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1662 may be separate from network node 1660 and may be connectable to network node 1660 through an interface or port.

Antenna 1662, interface 1690, and/or processing circuitry 1670 may be configured to perform any receiving operations and/or certain obtaining operations described herein as being performed by a network node. Any information, data and/or signals may be received from a wireless device, another network node and/or any other network equipment. Similarly, antenna 1662, interface 1690, and/or processing circuitry 1670 may be configured to perform any transmitting operations described herein as being performed by a network node. Any information, data and/or signals may be transmitted to a wireless device, another network node and/or any other network equipment.

Power circuitry 1687 may comprise, or be coupled to, power management circuitry and is configured to supply the components of network node 1660 with power for performing the functionality described herein. Power circuitry 1687 may receive power from power source 1686. Power source 1686 and/or power circuitry 1687 may be configured to provide power to the various components of network node 1660 in a form suitable for the respective components (e.g., at a voltage and current level needed for each respective component). Power source 1686 may either be included in, or external to, power circuitry 1687 and/or network node 1660. For example, network node 1660 may be connectable to an external power source (e.g., an electricity outlet) via an input circuitry or interface such as an electrical cable, whereby the external power source supplies power to power circuitry 1687. As a further example, power source 1686 may comprise a source of power in the form of a battery or battery pack which is connected to, or integrated in, power circuitry 1687. The battery may provide backup power should the external power source fail. Other types of power sources, such as photovoltaic devices, may also be used.

Alternative embodiments of network node 1660 may include additional components beyond those shown in Figure 16 that may be responsible for providing certain aspects of the network node's functionality, including any of the functionality described herein and/or any functionality necessary to support the subject matter described herein. For example, network node 1660 may include user interface equipment to allow input of information into network node 1660 and to allow output of information from network node 1660. This may allow a user to perform diagnostic, maintenance, repair, and other administrative functions for network node 1660.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1610 includes antenna 1611, interface 1614, processing circuitry 1620, device readable medium 1630, user interface equipment 1632, auxiliary equipment 1634, power source 1636 and power circuitry 1637. WD 1610 may include multiple sets of one or more of the illustrated components for different wireless technologies supported by WD 1610, such as, for example, GSM, WCDMA, LTE, NR, WiFi, WiMAX, or Bluetooth wireless technologies, just to mention a few. These wireless technologies may be integrated into the same or different chips or set of chips as other components within WD 1610.

Antenna 1611 may include one or more antennas or antenna arrays, configured to send and/or receive wireless signals, and is connected to interface 1614. In certain alternative embodiments, antenna 1611 may be separate from WD 1610 and be connectable to WD 1610 through an interface or port. Antenna 1611, interface 1614, and/or processing circuitry 1620 may be configured to perform any receiving or transmitting operations described herein as being performed by a WD. Any information, data and/or signals may be received from a network node and/or another WD. In some embodiments, radio front end circuitry and/or antenna 1611 may be considered an interface.

As illustrated, interface 1614 comprises radio front end circuitry 1612 and antenna 1611. Radio front end circuitry 1612 comprise one or more filters 1618 and amplifiers 1616. Radio front end circuitry 1614 is connected to antenna 1611 and processing circuitry 1620, and is configured to condition signals communicated between antenna 1611 and processing circuitry 1620. Radio front end circuitry 1612 may be coupled to or a part of antenna 1611. In some embodiments, WD 1610 may not include separate radio front end circuitry 1612; rather, processing circuitry 1620 may comprise radio front end circuitry and may be connected to antenna 1611. Similarly, in some embodiments, some or all of RF transceiver circuitry 1622 may be considered a part of interface 1614. Radio front end circuitry 1612 may receive digital data that is to be sent out to other network nodes or WDs via a wireless connection. Radio front end circuitry 1612 may convert the digital data into a radio signal having the appropriate channel and bandwidth parameters using a combination of filters 1618 and/or amplifiers 1616. The radio signal may then be transmitted via antenna 1611. Similarly, when receiving data, antenna 1611 may collect radio signals which are then converted into digital data by radio front end circuitry 1612. The digital data may be passed to processing circuitry 1620. In other embodiments, the interface may comprise different components and/or different combinations of components.

Processing circuitry 1620 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1610 components, such as device readable medium 1630, WD 1610 functionality. Such functionality may include providing any of the various wireless features or benefits discussed herein. For example, processing circuitry 1620 may execute instructions stored in device readable medium 1630 or in memory within processing circuitry 1620 to provide the functionality disclosed herein.

As illustrated, processing circuitry 1620 includes one or more of RF transceiver circuitry 1622, baseband processing circuitry 1624, and application processing circuitry 1626. In other embodiments, the processing circuitry may comprise different components and/or different combinations of components. In certain embodiments processing circuitry 1620 of WD 1610 may comprise a SOC. In some embodiments, RF transceiver circuitry 1622, baseband processing circuitry 1624, and application processing circuitry 1626 may be on separate chips or sets of chips. In alternative embodiments, part or all of baseband processing circuitry 1624 and application processing circuitry 1626 may be combined into one chip or set of chips, and RF transceiver circuitry 1622 may be on a separate chip or set of chips. In still alternative embodiments, part or all of RF transceiver circuitry 1622 and baseband processing circuitry 1624 may be on the same chip or set of chips, and application processing circuitry 1626 may be on a separate chip or set of chips. In yet other alternative embodiments, part or all of RF transceiver circuitry 1622, baseband processing circuitry 1624, and application processing circuitry 1626 may be combined in the same chip or set of chips. In some embodiments, RF transceiver circuitry 1622 may be a part of interface 1614. RF transceiver circuitry 1622 may condition RF signals for processing circuitry 1620.

In certain embodiments, some or all of the functionality described herein as being performed by a WD may be provided by processing circuitry 1620 executing instructions stored on device readable medium 1630, which in certain embodiments may be a computer-readable storage medium. In alternative embodiments, some or all of the functionality may be provided by processing circuitry 1620 without executing instructions stored on a separate or discrete device readable storage medium, such as in a hard-wired manner. In any of those particular embodiments, whether executing instructions stored on a device readable storage medium or not, processing circuitry 1620 can be configured to perform the described functionality. The benefits provided by such functionality are not limited to processing circuitry 1620 alone or to other components of WD 1610, but are enjoyed by WD 1610 as a whole, and/or by end users and the wireless network generally.

Processing circuitry 1620 may be configured to perform any determining, calculating, or similar operations (e.g., certain obtaining operations) described herein as being performed by a WD. These operations, as performed by processing circuitry 1620, may include processing information obtained by processing circuitry 1620 by, for example, converting the obtained information into other information, comparing the obtained information or converted information to information stored by WD 1610, and/or performing one or more operations based on the obtained information or converted information, and as a result of said processing making a determination.

Device readable medium 1630 may be operable to store a computer program, software, an application including one or more of logic, rules, code, tables, etc. and/or other instructions capable of being executed by processing circuitry 1620. Device readable medium 1630 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1620. In some embodiments, processing circuitry 1620 and device readable medium 1630 may be considered to be integrated. User interface equipment 1632 may provide components that allow for a human user to interact with WD 1610. Such interaction may be of many forms, such as visual, audial, tactile, etc. User interface equipment 1632 may be operable to produce output to the user and to allow the user to provide input to WD 1610. The type of interaction may vary depending on the type of user interface equipment 1632 installed in WD 1610. For example, if WD 1610 is a smart phone, the interaction may be via a touch screen; if WD 1610 is a smart meter, the interaction may be through a screen that provides usage (e.g., the number of gallons used) or a speaker that provides an audible alert (e.g., if smoke is detected). User interface equipment 1632 may include input interfaces, devices and circuits, and output interfaces, devices and circuits. User interface equipment 1632 is configured to allow input of information into WD 1610, and is connected to processing circuitry 1620 to allow processing circuitry 1620 to process the input information. User interface equipment 1632 may include, for example, a microphone, a proximity or other sensor, keys/buttons, a touch display, one or more cameras, a USB port, or other input circuitry. User interface equipment 1632 is also configured to allow output of information from WD 1610, and to allow processing circuitry 1620 to output information from WD 1610. User interface equipment 1632 may include, for example, a speaker, a display, vibrating circuitry, a USB port, a headphone interface, or other output circuitry. Using one or more input and output interfaces, devices, and circuits, of user interface equipment 1632, WD 1610 may communicate with end users and/or the wireless network, and allow them to benefit from the functionality described herein.

Auxiliary equipment 1634 is operable to provide more specific functionality which may not be generally performed by WDs. This may comprise specialized sensors for doing measurements for various purposes, interfaces for additional types of communication such as wired communications etc. The inclusion and type of components of auxiliary equipment 1634 may vary depending on the embodiment and/or scenario.

Power source 1636 may, in some embodiments, be in the form of a battery or battery pack. Other types of power sources, such as an external power source (e.g., an electricity outlet), photovoltaic devices or power cells, may also be used. WD 1610 may further comprise power circuitry 1637 for delivering power from power source 1636 to the various parts of WD 1610 which need power from power source 1636 to carry out any functionality described or indicated herein. Power circuitry 1637 may in certain embodiments comprise power management circuitry. Power circuitry 1637 may additionally or alternatively be operable to receive power from an external power source; in which case WD 1610 may be connectable to the external power source (such as an electricity outlet) via input circuitry or an interface such as an electrical power cable. Power circuitry 1637 may also in certain embodiments be operable to deliver power from an external power source to power source 1636. This may be, for example, for the charging of power source 1636. Power circuitry 1637 may perform any formatting, converting, or other modification to the power from power source 1636 to make the power suitable for the respective components of WD 1610 to which power is supplied.

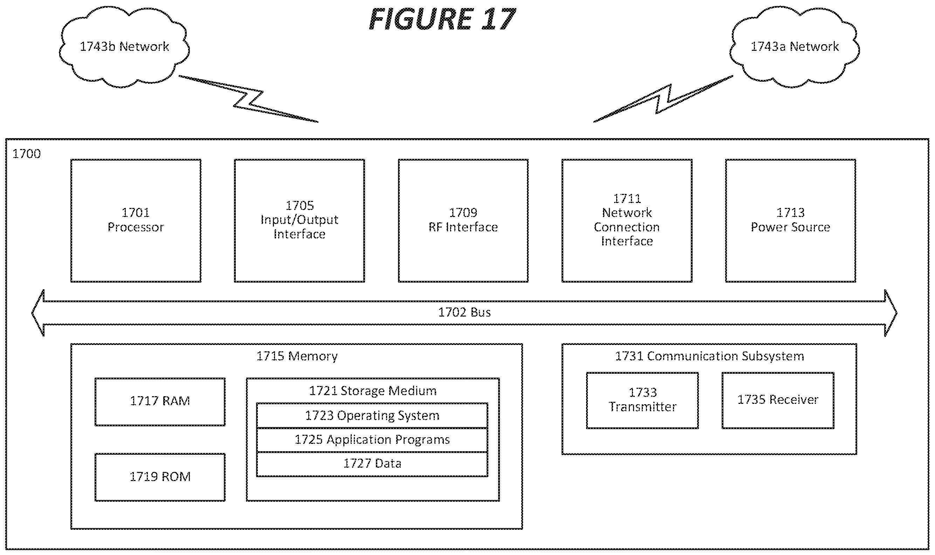

Figure 17: User Equipment in accordance with some embodiments

Figure 17 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 17200 may be any UE identified by the 3rd Generation Partnership Project (3GPP), including a NB-IoT UE, a machine type communication (MTC) UE, and/or an enhanced MTC (eMTC) UE. UE 1700, as illustrated in Figure 17, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 17 is a UE, the components discussed herein are equally applicable to a WD, and vice-versa.

In Figure 17, UE 1700 includes processing circuitry 1701 that is operatively coupled to input/output interface 1705, radio frequency (RF) interface 1709, network connection interface 1711, memory 1715 including random access memory (RAM) 1717, read-only memory (ROM) 1719, and storage medium 1721 or the like, communication subsystem 1731, power source 1733, and/or any other component, or any combination thereof. Storage medium 1721 includes operating system 1723, application program 1725, and data 1727. In other embodiments, storage medium 1721 may include other similar types of information. Certain UEs may utilize all of the components shown in Figure 17, or only a subset of the components. The level of integration between the components may vary from one UE to another UE. Further, certain UEs may contain multiple instances of a component, such as multiple processors, memories, transceivers, transmitters, receivers, etc.

In Figure 17, processing circuitry 1701 may be configured to process computer instructions and data. Processing circuitry 1701 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1701 may include two central processing units (CPUs). Data may be information in a form suitable for use by a computer.

In the depicted embodiment, input/output interface 1705 may be configured to provide a communication interface to an input device, output device, or input and output device. UE 1700 may be configured to use an output device via input/output interface 1705. An output device may use the same type of interface port as an input device. For example, a USB port may be used to provide input to and output from UE 1700. The output device may be a speaker, a sound card, a video card, a display, a monitor, a printer, an actuator, an emitter, a smartcard, another output device, or any combination thereof. UE 1700 may be configured to use an input device via input/output interface 1705 to allow a user to capture information into UE 1700. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 17, RF interface 1709 may be configured to provide a communication interface to RF components such as a transmitter, a receiver, and an antenna. Network connection interface 1711 may be configured to provide a communication interface to network 1743a. Network 1743a may encompass wired and/or wireless networks such as a local-area network (LAN), a wide-area network (WAN), a computer network, a wireless network, a telecommunications network, another like network or any combination thereof. For example, network 1743a may comprise a Wi-Fi network.

Network connection interface 1711 may be configured to include a receiver and a transmitter interface used to communicate with one or more other devices over a communication network according to one or more communication protocols, such as Ethernet, TCP/IP, SONET, ATM, or the like. Network connection interface 1711 may implement receiver and transmitter functionality appropriate to the communication network links (e.g., optical, electrical, and the like). The transmitter and receiver functions may share circuit components, software or firmware, or alternatively may be implemented separately.

RAM 1717 may be configured to interface via bus 1702 to processing circuitry 1701 to provide storage or caching of data or computer instructions during the execution of software programs such as the operating system, application programs, and device drivers. ROM 1719 may be configured to provide computer instructions or data to processing circuitry 1701. For example, ROM 1719 may be configured to store invariant low-level system code or data for basic system functions such as basic input and output (I/O), startup, or reception of keystrokes from a keyboard that are stored in a non-volatile memory. Storage medium 1721 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1721 may be configured to include operating system 1723, application program 1725 such as a web browser application, a widget or gadget engine or another application, and data file 1727. Storage medium 1721 may store, for use by UE 1700, any of a variety of various operating systems or combinations of operating systems.

Storage medium 1721 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1721 may allow UE 1700 to access computer-executable instructions, application programs or the like, stored on transitory or non-transitory memory media, to off-load data, or to upload data. An article of manufacture, such as one utilizing a communication system may be tangibly embodied in storage medium 1721, which may comprise a device readable medium.

In Figure 17, processing circuitry 1701 may be configured to communicate with network 1743b using communication subsystem 1731. Network 1743a and network 1743b may be the same network or networks or different network or networks. Communication subsystem 1731 may be configured to include one or more transceivers used to communicate with network 1743b. For example, communication subsystem 1731 may be configured to include one or more transceivers used to communicate with one or more remote transceivers of another device capable of wireless communication such as another WD, UE, or base station of a radio access network (RAN) according to one or more communication protocols, such as IEEE 802.17, CDMA, WCDMA, GSM, LTE, UTRAN, WiMax, or the like. Each transceiver may include transmitter 1733 and/or receiver 1735 to implement transmitter or receiver functionality, respectively, appropriate to the RAN links (e.g., frequency allocations and the like). Further, transmitter 1733 and receiver 1735 of each transceiver may share circuit components, software or firmware, or alternatively may be implemented separately.

In the illustrated embodiment, the communication functions of communication subsystem 1731 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1731 may include cellular communication, Wi-Fi communication, Bluetooth communication, and GPS communication. Network 1743b may encompass wired and/or wireless networks such as a local-area network (LAN), a wide-area network (WAN), a computer network, a wireless network, a telecommunications network, another like network or any combination thereof. For example, network 1743b may be a cellular network, a Wi-Fi network, and/or a near-field network. Power source 1713 may be configured to provide alternating current (AC) or direct current (DC) power to components of UE 1700.

The features, benefits and/or functions described herein may be implemented in one of the components of UE 1700 or partitioned across multiple components of UE 1700. Further, the features, benefits, and/or functions described herein may be implemented in any combination of hardware, software or firmware. In one example, communication subsystem 1731 may be configured to include any of the components described herein. Further, processing circuitry 1701 may be configured to communicate with any of such components over bus 1702. In another example, any of such components may be represented by program instructions stored in memory that when executed by processing circuitry 1701 perform the corresponding functions described herein. In another example, the functionality of any of such components may be partitioned between processing circuitry 1701 and communication subsystem 1731. In another example, the non-computationally intensive functions of any of such components may be implemented in software or firmware and the computationally intensive functions may be implemented in hardware.

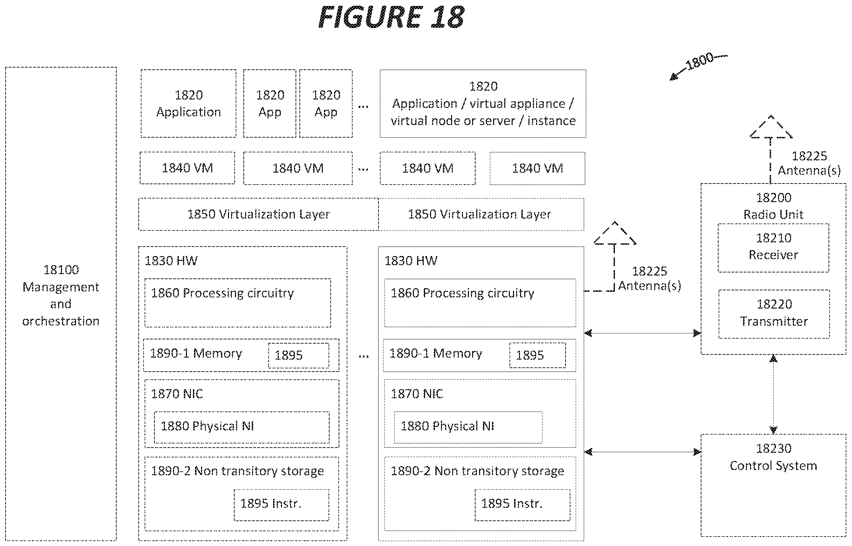

Figure 18: Virtualization environment in accordance with some embodiments

Figure 18 is a schematic block diagram illustrating a virtualization environment 1800 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1800 hosted by one or more of hardware nodes 1830. Further, in embodiments in which the virtual node is not a radio access node or does not require radio connectivity (e.g., a core network node), then the network node may be entirely virtualized.

The functions may be implemented by one or more applications 1820 (which may alternatively be called software instances, virtual appliances, network functions, virtual nodes, virtual network functions, etc.) operative to implement some of the features, functions, and/or benefits of some of the embodiments disclosed herein. Applications 1820 are run in virtualization environment 1800 which provides hardware 1830 comprising processing circuitry 1860 and memory 1890. Memory 1890 contains instructions 1895 executable by processing circuitry 1860 whereby application 1820 is operative to provide one or more of the features, benefits, and/or functions disclosed herein.

Virtualization environment 1800, comprises general-purpose or special-purpose network hardware devices 1830 comprising a set of one or more processors or processing circuitry 1860, which may be commercial off-the-shelf (COTS) processors, dedicated Application Specific Integrated Circuits (ASICs), or any other type of processing circuitry including digital or analog hardware components or special purpose processors. Each hardware device may comprise memory 1890-1 which may be non-persistent memory for temporarily storing instructions 1895 or software executed by processing circuitry 1860. Each hardware device may comprise one or more network interface controllers (NICs) 1870, also known as network interface cards, which include physical network interface 1880. Each hardware device may also include non-transitory, persistent, machine-readable storage media 1890-2 having stored therein software 1895 and/or instructions executable by processing circuitry 1860. Software 1895 may include any type of software including software for instantiating one or more virtualization layers 1850 (also referred to as hypervisors), software to execute virtual machines 1840 as well as software allowing it to execute functions, features and/or benefits described in relation with some embodiments described herein.

Virtual machines 1840, comprise virtual processing, virtual memory, virtual networking or interface and virtual storage, and may be run by a corresponding virtualization layer 1850 or hypervisor. Different embodiments of the instance of virtual appliance 1820 may be implemented on one or more of virtual machines 1840, and the implementations may be made in different ways.

During operation, processing circuitry 1860 executes software 1895 to instantiate the hypervisor or virtualization layer 1850, which may sometimes be referred to as a virtual machine monitor (VMM). Virtualization layer 1850 may present a virtual operating platform that appears like networking hardware to virtual machine 1840.

As shown in Figure 18, hardware 1830 may be a standalone network node with generic or specific components. Hardware 1830 may comprise antenna 18225 and may implement some functions via virtualization. Alternatively, hardware 1830 may be part of a larger cluster of hardware (e.g. such as in a data center or customer premise equipment (CPE)) where many hardware nodes work together and are managed via management and orchestration (MANO) 18100, which, among others, oversees lifecycle management of applications 1820.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1840 may be a software implementation of a physical machine that runs programs as if they were executing on a physical, non-virtualized machine. Each of virtual machines 1840, and that part of hardware 1830 that executes that virtual machine, be it hardware dedicated to that virtual machine and/or hardware shared by that virtual machine with others of the virtual machines 1840, forms a separate virtual network elements (VNE).

Still in the context of NFV, Virtual Network Function (VNF) is responsible for handling specific network functions that run in one or more virtual machines 1840 on top of hardware networking infrastructure 1830 and corresponds to application 1820 in Figure 18.

In some embodiments, one or more radio units 18200 that each include one or more transmitters 18220 and one or more receivers 18210 may be coupled to one or more antennas 18225. Radio units 18200 may communicate directly with hardware nodes 1830 via one or more appropriate network interfaces and may be used in combination with the virtual components to provide a virtual node with radio capabilities, such as a radio access node or a base station.

In some embodiments, some signalling can be effected with the use of control system 18230 which may alternatively be used for communication between the hardware nodes 1830 and radio units 18200.

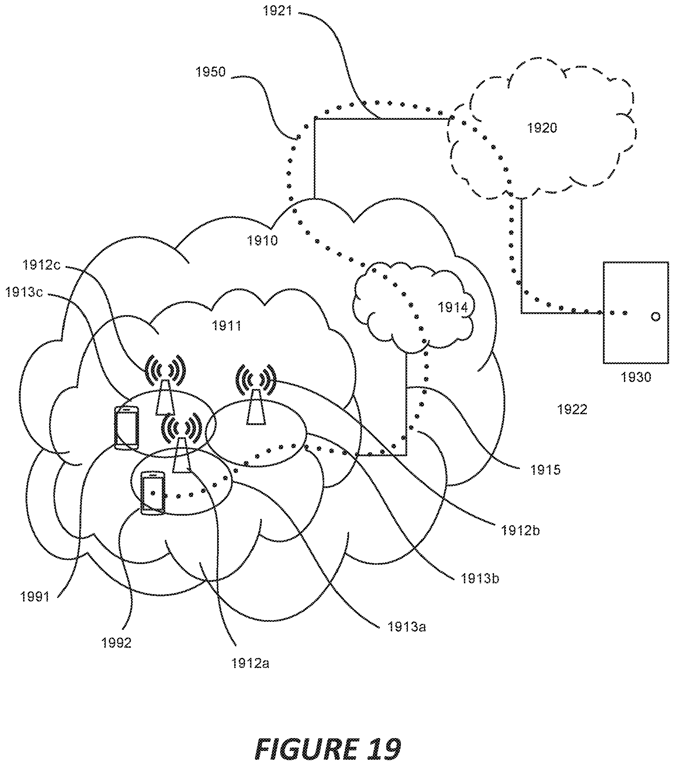

Figure 19: Telecommunication network connected via an intermediate network to a host computer in accordance with some embodiments.

With reference to FIGURE 19, in accordance with an embodiment, a communication system includes telecommunication network 1910, such as a 3GPP-type cellular network, which comprises access network 1911, such as a radio access network, and core network 1914. Access network 1911 comprises a plurality of base stations 1912a, 1912b, 1912c, such as NBs, eNBs, gNBs or other types of wireless access points, each defining a corresponding coverage area 1913a, 1913b, 1913c. Each base station 1912a, 1912b, 1912c is connectable to core network 1914 over a wired or wireless connection 1915. A first UE 1991 located in coverage area 1913c is configured to wirelessly connect to, or be paged by, the corresponding base station 1912c. A second UE 1992 in coverage area 1913a is wirelessly connectable to the corresponding base station 1912a. While a plurality of UEs 1991, 1992 are illustrated in this example, the disclosed embodiments are equally applicable to a situation where a sole UE is in the coverage area or where a sole UE is connecting to the corresponding base station 1912.

Telecommunication network 1910 is itself connected to host computer 1930, which may be embodied in the hardware and/or software of a standalone server, a cloud-implemented server, a distributed server or as processing resources in a server farm. Host computer 1930 may be under the ownership or control of a service provider, or may be operated by the service provider or on behalf of the service provider. Connections 1921 and 1922 between telecommunication network 1910 and host computer 1930 may extend directly from core network 1914 to host computer 1930 or may go via an optional intermediate network 1920. Intermediate network 1920 may be one of, or a combination of more than one of, a public, private or hosted network; intermediate network 1920, if any, may be a backbone network or the Internet; in particular, intermediate network 1920 may comprise two or more sub-networks (not shown).

The communication system of Figure 19 as a whole enables connectivity between the connected UEs 1991, 1992 and host computer 1930. The connectivity may be described as an over-the-top (OTT) connection 1950. Host computer 1930 and the connected UEs 1991, 1992 are configured to communicate data and/or signaling via OTT connection 1950, using access network 1911, core network 1914, any intermediate network 1920 and possible further infrastructure (not shown) as intermediaries. OTT connection 1950 may be transparent in the sense that the participating communication devices through which OTT connection 1950 passes are unaware of routing of uplink and downlink communications. For example, base station 1912 may not or need not be informed about the past routing of an incoming downlink communication with data originating from host computer 1930 to be forwarded (e.g., handed over) to a connected UE 1991. Similarly, base station 1912 need not be aware of the future routing of an outgoing uplink communication originating from the UE 1991 towards the host computer 1930.

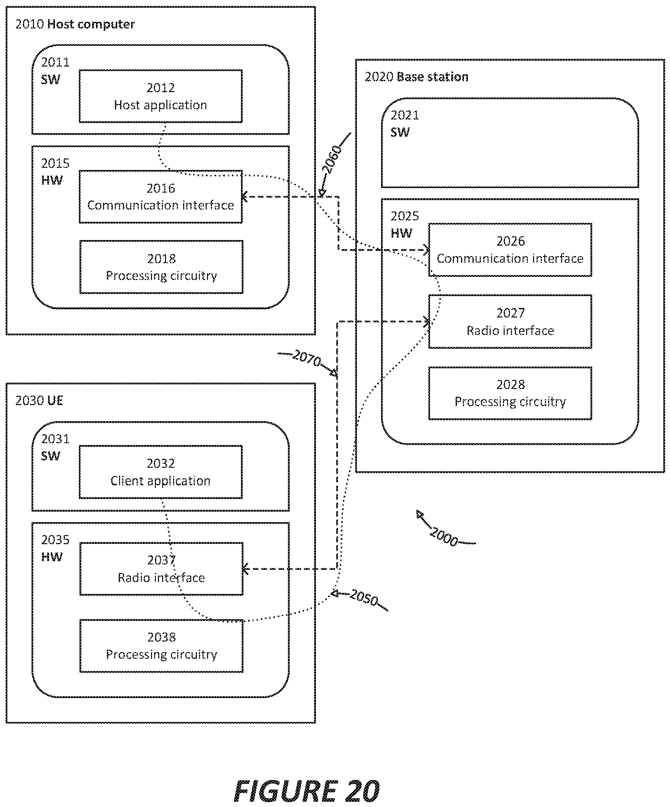

Figure 20: Host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 20. In communication system 2000, host computer 2010 comprises hardware 2015 including communication interface 2016 configured to set up and maintain a wired or wireless connection with an interface of a different communication device of communication system 2000. Host computer 2010 further comprises processing circuitry 2018, which may have storage and/or processing capabilities. In particular, processing circuitry 2018 may comprise one or more programmable processors, application-specific integrated circuits, field programmable gate arrays or combinations of these (not shown) adapted to execute instructions. Host computer 2010 further comprises software 2011, which is stored in or accessible by host computer 2010 and executable by processing circuitry 2018. Software 2011 includes host application 2012. Host application 2012 may be operable to provide a service to a remote user, such as UE 2030 connecting via OTT connection 2050 terminating at UE 2030 and host computer 2010. In providing the service to the remote user, host application 2012 may provide user data which is transmitted using OTT connection 2050.

Communication system 2000 further includes base station 2020 provided in a telecommunication system and comprising hardware 2025 enabling it to communicate with host computer 2010 and with UE 2030. Hardware 2025 may include communication interface 2026 for setting up and maintaining a wired or wireless connection with an interface of a different communication device of communication system 2000, as well as radio interface 2027 for setting up and maintaining at least wireless connection 2070 with UE 2030 located in a coverage area (not shown in Figure 20) served by base station 2020. Communication interface 2026 may be configured to facilitate connection 2060 to host computer 2010. Connection 2060 may be direct or it may pass through a core network (not shown in Figure 20) of the telecommunication system and/or through one or more intermediate networks outside the telecommunication system. In the embodiment shown, hardware 2025 of base station 2020 further includes processing circuitry 2028, which may comprise one or more programmable processors, application-specific integrated circuits, field programmable gate arrays or combinations of these (not shown) adapted to execute instructions. Base station 2020 further has software 2021 stored internally or accessible via an external connection.

Communication system 2000 further includes UE 2030 already referred to. Its hardware 2035 may include radio interface 2037 configured to set up and maintain wireless connection 2070 with a base station serving a coverage area in which UE 2030 is currently located. Hardware 2035 of UE 2030 further includes processing circuitry 2038, which may comprise one or more programmable processors, application-specific integrated circuits, field programmable gate arrays or combinations of these (not shown) adapted to execute instructions. UE 2030 further comprises software 2031, which is stored in or accessible by UE 2030 and executable by processing circuitry 2038. Software 2031 includes client application 2032. Client application 2032 may be operable to provide a service to a human or non-human user via UE 2030, with the support of host computer 2010. In host computer 2010, an executing host application 2012 may communicate with the executing client application 2032 via OTT connection 2050 terminating at UE 2030 and host computer 2010. In providing the service to the user, client application 2032 may receive request data from host application 2012 and provide user data in response to the request data. OTT connection 2050 may transfer both the request data and the user data. Client application 2032 may interact with the user to generate the user data that it provides.

It is noted that host computer 2010, base station 2020 and UE 2030 illustrated in Figure 20 may be similar or identical to host computer 1930, one of base stations 1912a, 1912b, 1912c and one of UEs 1991, 1992 of Figure 19, respectively. This is to say, the inner workings of these entities may be as shown in Figure 20 and independently, the surrounding network topology may be that of Figure 19.

In Figure 20, OTT connection 2050 has been drawn abstractly to illustrate the communication between host computer 2010 and UE 2030 via base station 2020, without explicit reference to any intermediary devices and the precise routing of messages via these devices. Network infrastructure may determine the routing, which it may be configured to hide from UE 2030 or from the service provider operating host computer 2010, or both. While OTT connection 2050 is active, the network infrastructure may further take decisions by which it dynamically changes the routing (e.g., on the basis of load balancing consideration or reconfiguration of the network).

Wireless connection 2070 between UE 2030 and base station 2020 is in accordance with the teachings of the embodiments described throughout this disclosure. One or more of the various embodiments may improve the performance of OTT services provided to UE 2030 using OTT connection 2050, in which wireless connection 2070 forms the last segment. More precisely, the teachings of these embodiments may improve the deblock filtering for video processing and thereby provide benefits such as improved video encoding and/or decoding.

A measurement procedure may be provided for the purpose of monitoring data rate, latency and other factors on which the one or more embodiments improve. There may further be an optional network functionality for reconfiguring OTT connection 2050 between host computer 2010 and UE 2030, in response to variations in the measurement results. The measurement procedure and/or the network functionality for reconfiguring OTT connection 2050 may be implemented in software 2011 and hardware 2015 of host computer 2010 or in software 2031 and hardware 2035 of UE 2030, or both. In embodiments, sensors (not shown) may be deployed in or in association with communication devices through which OTT connection 2050 passes; the sensors may participate in the measurement procedure by supplying values of the monitored quantities exemplified above, or supplying values of other physical quantities from which software 2011, 2031 may compute or estimate the monitored quantities. The reconfiguring of OTT connection 2050 may include message format, retransmission settings, preferred routing etc.; the reconfiguring need not affect base station 2020, and it may be unknown or imperceptible to base station 2020. Such procedures and functionalities may be known and practiced in the art. In certain embodiments, measurements may involve proprietary UE signaling facilitating host computer 2010's measurements of throughput, propagation times, latency and the like. The measurements may be implemented in that software 2011 and 2031 causes messages to be transmitted, in particular empty or 'dummy' messages, using OTT connection 2050 while it monitors propagation times, errors etc.

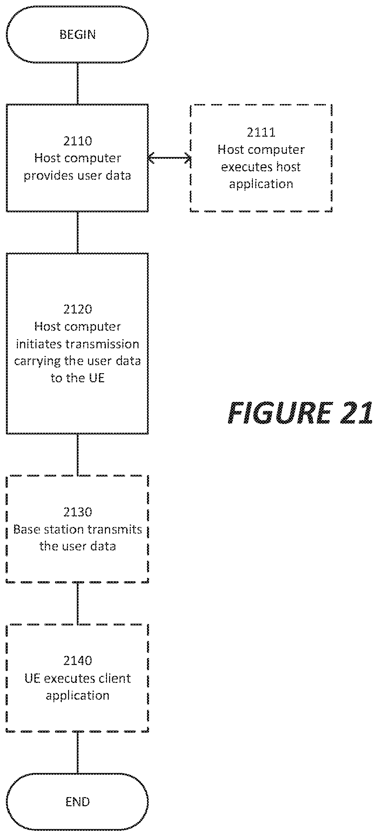

Figure 21: Methods implemented in a communication system including a host computer, a base station and a user equipment in accordance with some embodiments.

Figure 21 is a flowchart illustrating a method implemented in a communication system, in accordance with one embodiment. The communication system includes a host computer, a base station and a UE which may be those described with reference to Figures 19 and 20. For simplicity of the present disclosure, only drawing references to Figure 21 will be included in this section. In step 2110, the host computer provides user data. In substep 2111 (which may be optional) of step 2110, the host computer provides the user data by executing a host application. In step 2120, the host computer initiates a transmission carrying the user data to the UE. In step 2130 (which may be optional), the base station transmits to the UE the user data which was carried in the transmission that the host computer initiated, in accordance with the teachings of the embodiments described throughout this disclosure. In step 2140 (which may also be optional), the UE executes a client application associated with the host application executed by the host computer.

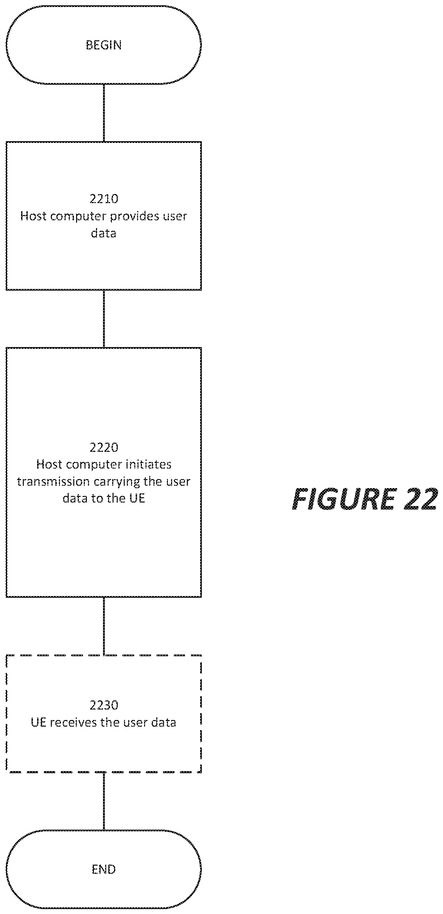

Figure 22: Methods implemented in a communication system including a host computer, a base station and a user equipment in accordance with some embodiments.

Figure 22 is a flowchart illustrating a method implemented in a communication system, in accordance with one embodiment. The communication system includes a host computer, a base station and a UE which may be those described with reference to Figures 19 and 20. For simplicity of the present disclosure, only drawing references to Figure 22 will be included in this section. In step 2210 of the method, the host computer provides user data. In an optional substep (not shown) the host computer provides the user data by executing a host application. In step 2220, the host computer initiates a transmission carrying the user data to the UE. The transmission may pass via the base station, in accordance with the teachings of the embodiments described throughout this disclosure. In step 2230 (which may be optional), the UE receives the user data carried in the transmission.

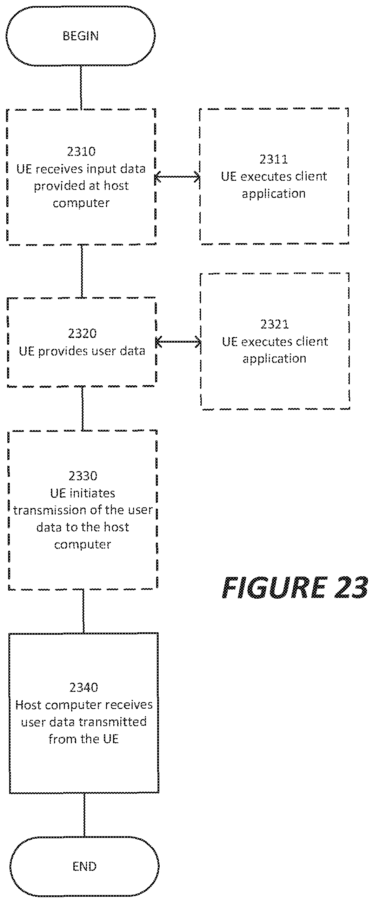

Figure 23: Methods implemented in a communication system including a host computer, a base station and a user equipment in accordance with some embodiments.

Figure 23 is a flowchart illustrating a method implemented in a communication system, in accordance with one embodiment. The communication system includes a host computer, a base station and a UE which may be those described with reference to Figures 19 and 20. For simplicity of the present disclosure, only drawing references to Figure 23 will be included in this section. In step 2310 (which may be optional), the UE receives input data provided by the host computer. Additionally or alternatively, in step 2320, the UE provides user data. In substep 2321 (which may be optional) of step 2320, the UE provides the user data by executing a client application. In substep 2311 (which may be optional) of step 2310, the UE executes a client application which provides the user data in reaction to the received input data provided by the host computer. In providing the user data, the executed client application may further consider user input received from the user. Regardless of the specific manner in which the user data was provided, the UE initiates, in substep 2330 (which may be optional), transmission of the user data to the host computer. In step 2340 of the method, the host computer receives the user data transmitted from the UE, in accordance with the teachings of the embodiments described throughout this disclosure.

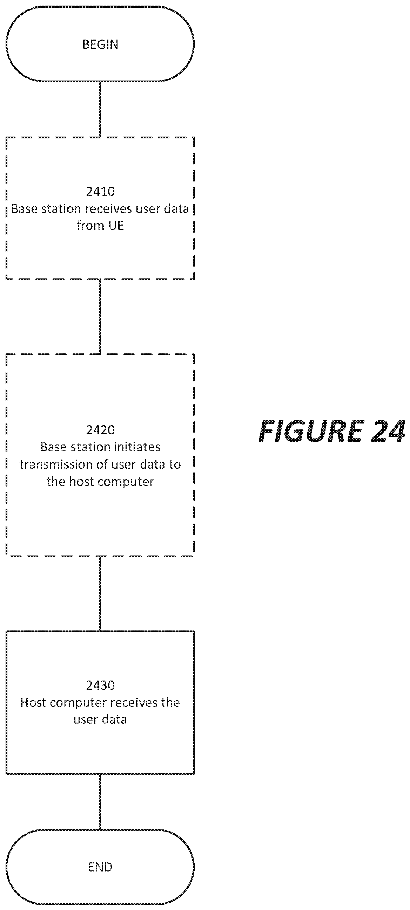

Figure 24: Methods implemented in a communication system including a host computer, a base station and a user equipment in accordance with some embodiments.

Figure 24 is a flowchart illustrating a method implemented in a communication system, in accordance with one embodiment. The communication system includes a host computer, a base station and a UE which may be those described with reference to Figures 19 and 20. For simplicity of the present disclosure, only drawing references to Figure 24 will be included in this section. In step 2410 (which may be optional), in accordance with the teachings of the embodiments described throughout this disclosure, the base station receives user data from the UE. In step 2420 (which may be optional), the base station initiates transmission of the received user data to the host computer. In step 2430 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

**Claims**

1. A method of operating a user equipment, UE, comprising:

    performing (202) a channel measurement on a measurement resource for channel measurement within a time interval of length prs;
    performing (204) periodic interference measurements on measurement resources within the time interval, wherein the periodic interference measurements are taken according to a period of length pim, where pim < prs;
    for each interference measurement, determining (206) a quality value associated with the interference measurement and the channel measurement;
    determining (208) a statistical measure based on the quality values; and
    transmitting (210) the statistical measure to a network node in a channel state information, CSI, report.

**2.** The method of Claim 1, wherein the quality value comprises one or more of a channel quality indicator, CQI, symbol information, a Signal-to-Interference-and-Noise Ratio, SINR, and a spectral efficiency, SE.

**3.** The method of Claim 1 or 2, wherein the statistical measure comprises one or more of a maximum value, a minimum value, a mean, a variance, a standard deviation and a percentile of distribution.

**4.** The method of Claim 1, further comprising, for each interference measurement within the time interval, determining a channel quality indicator, CQI, value associated with the interference measurement.

**5.** The method of Claim 4, wherein the indicator comprises one or more of: the CQI values, a highest one of the CQI values for which a downlink transport block can be received with an error probability not exceeding a predetermined probability P, and a CQI statistical metric generated based on one or more of the CQI values.

**6.** The method of Claim 5, wherein the CQI statistical metric comprises one or more of: an average, a maximum, a median, a standard deviation, a variance and a CQI variation index that represents variation of the CQI values.

**7.** The method of any of Claims 4 to 6, wherein the indicator comprises a mean or median CQI value and the CSI report comprises a first CSI report, the method further comprising generating a measure of variation of the CQI values and transmitting the measure of variation of the CQI values in a second CSI report.

**8.** A user equipment, UE (1500), comprising:

a processing circuit (1503);
a transceiver (1502) coupled to the processing circuit; and
a memory (1505) coupled to the processing circuit, wherein the memory comprises computer readable program instructions that, when executed by the processing circuit, cause the UE to perform operations according to any of Claims 1 to 7.

**9.** A method of operating a network node, comprising:

configuring (302) a user equipment, UE, to perform a channel measurement on a channel measurement resource within a time interval of length prs;
configuring (304) the UE to perform periodic interference measurements within the time interval, wherein the periodic interference measurements are taken according to a period of length pim, where pim < prs;
configuring (306) the UE to determine, for each interference measurement, a quality value associated with the interference measurement and the channel measurement;
configuring (308) the UE to determine a statistical measure based on the quality values; and
receiving (310) the statistical measure from the UE in a channel state information, CSI, report.

**10.** The method of Claim 9, wherein the quality value comprises one or more of a channel quality indicator, CQI, symbol information, a Signal-to-Interference-and-Noise Ratio, SINR, and a spectral efficiency, SE.

**11.** The method of Claim 9 or 10, wherein the statistical measure comprises one or more of a maximum value, a minimum value, a mean, a variance, a standard deviation and a percentile of distribution.

**12.** The method of any of Claims 9 to 11, further comprising:
configuring the UE, for each interference measurement within the time interval, to determine a channel quality indicator, CQI, value associated with the interference measurement;

**13.** The method of Claim 12, wherein the indicator comprises one or more of the CQI values or a highest one of the CQI values for which a downlink transport block can be received with an error probability not exceeding a predetermined probability P or a CQI statistical metric generated based on one or more of the CQI values.

**14.** The method of Claim 13, wherein the CQI statistical metric comprises one or more of: an average, maximum, median, standard deviation, variance and CQI variation index that represents variation of the CQI values.

**15.** The method of any of Claims 12 to 14, wherein the indicator comprises a mean or median CQI value and the CSI report comprises a first CSI report, the method further comprising generating a measure of variation of the CQI values and transmitting the measure of variation of the CQI values in a second CSI report.

16. A network node (1400), comprising:

> a processing circuit (1403);
> a transceiver (1402) coupled to the processing circuit; and
> a memory (1405) coupled to the processing circuit, wherein the memory comprises computer readable program instructions that, when executed by the processing circuit, cause the network to perform operations according to any of Claims 9 to 15.

**Patentansprüche**

1. Verfahren zum Betreiben einer Benutzereinrichtung, UE, umfassend:

> Durchführen (202) einer Kanalmessung auf einer Messressource für Kanalmessung innerhalb eines Zeitintervalls einer Länge prs;
> Durchführen (204) periodischer Interferenzmessungen auf Messressourcen innerhalb des Zeitintervalls, wobei die periodischen Interferenzmessungen gemäß einer Periode einer Länge pim vorgenommen werden, wobei pim < prs;
> für jede Interferenzmessung, Bestimmen (206) eines Qualitätswerts, welcher der Interferenzmessung und der Kanalmessung zugeordnet ist;
> Bestimmen (208) eines statistischen Maßes basierend auf den Qualitätswerten; und
> Übermitteln (210) des statistischen Maßes an einen Netzwerkknoten in einer Kanalzustandsinformationsmeldung, CSI-Meldung.

2. Verfahren nach Anspruch 1, wobei der Qualitätswert eines oder mehrere von einer Kanalqualitätsindikatorsymbolinformation, CQI-Symbolinformation, einem Signal-zu-Interferenz-und-RauschVerhältnis, SINR, und einer spektralen Effizienz, SE, umfasst.

3. Verfahren nach Anspruch 1 oder 2, wobei das statistische Maß eines oder mehrere von einem Maximalwert, einem Minimalwert, einem Mittelwert, einer Varianz, einer Standardabweichung und einem Verteilungsperzentil umfasst.

4. Verfahren nach Anspruch 1, ferner umfassend, für jede Interferenzmessung innerhalb des Zeitintervalls, Bestimmen eines Kanalqualitätsindikatorwerts, CQI-Werts, welcher der Interferenzmessung zugeordnet ist.

5. Verfahren nach Anspruch 4, wobei der Indikator eines oder mehrere von Folgenden umfasst: die CQI-Werte, einen höchsten der CQI-Werte, für den ein Downlink-Transportblock mit einer Fehlerwahrscheinlichkeit empfangen werden kann, welche eine vorbestimmte Wahrscheinlichkeit P nicht überschreitet, und eine statistische CQI-Metrik, die basierend auf einem oder mehreren der CQI-Werte erzeugt wurde.

6. Verfahren nach Anspruch 5, wobei die statistische CQI-Metrik eines oder mehrere von Folgenden umfasst: einen Durchschnitt, ein Maximum, einen Median, eine Standardabweichung, eine Varianz und einen CQI-Variationsindex, der eine Variation der CQI-Werte darstellt.

7. Verfahren nach einem der Ansprüche 4 bis 6, wobei der Indikator einen mittleren oder einen medianen CQI-Wert umfasst und die CSI-Meldung eine erste CSI-Meldung umfasst, wobei das Verfahren ferner Erzeugen eines Variationsmaßes der CQI-Werte und Übermitteln des Variationsmaßes der CQI-Werte in einer zweiten CSI-Meldung umfasst.

8. Benutzereinrichtung, UE (1500), umfassend:

> eine Verarbeitungsschaltung (1503);
> einen Sendeempfänger (1502), der mit der Verarbeitungsschaltung gekoppelt ist; und
> einen Speicher (1505), der mit der Verarbeitungsschaltung gekoppelt ist, wobei der Speicher computerlesbare Programmanweisungen umfasst, die, wenn sie durch die Verarbeitungsschaltung ausgeführt werden, die UE dazu veranlassen, Vorgänge nach einem der Ansprüche 1 bis 7 durchzuführen.

**9.** Verfahren zum Betreiben eines Netzwerkknotens, umfassend:

Konfigurieren (302) einer Benutzereinrichtung, UE, um eine Kanalmessung auf einer Kanalmessressource innerhalb eines Zeitintervalls einer Länge prs durchzuführen;
Konfigurieren (304) der UE, um periodische Interferenzmessungen innerhalb des Zeitintervalls durchzuführen, wobei die periodischen Interferenzmessungen gemäß einer Periode einer Länge pim vorgenommen werden, wobei pim < prs;
Konfigurieren (306) der UE, um, für jede Interferenzmessung, einen Qualitätswert zu bestimmen, welcher der Interferenzmessung und der Kanalmessung zugeordnet ist;
Konfigurieren (308) der UE, um ein statistisches Maß basierend auf den Qualitätswerten zu bestimmen; und
Empfangen (310) des statistischen Maßes von der UE in einer Kanalzustandsinformationsmeldung, CSI-Meldung.

**10.** Verfahren nach Anspruch 9, wobei der Qualitätswert eines oder mehrere von einer Kanalqualitätsindikatorsymbolinformation, CQI-Symbolinformation, einem Signal-zu-Interferenz-und-RauschVerhältnis, SINR, und einer spektralen Effizienz, SE, umfasst.

**11.** Verfahren nach Anspruch 9 oder 10, wobei das statistische Maß eines oder mehrere von einem Maximalwert, einem Minimalwert, einem Mittelwert, einer Varianz, einer Standardabweichung und einem Verteilungsperzentil umfasst.

**12.** Verfahren nach einem der Ansprüche 9 bis 11, ferner umfassend:
Konfigurieren der UE, für jede Interferenzmessung innerhalb des Zeitintervalls, um einen Kanalqualitätsindikatorwert, CQI-Wert, zu bestimmen, welcher der Interferenzmessung zugeordnet ist.

**13.** Verfahren nach Anspruch 12, wobei der Indikator einen oder mehrere der CQI-Werte oder einen höchsten der CQI-Werte, für den ein Downlink-Transportblock mit einer Fehlerwahrscheinlichkeit empfangen werden kann, die eine vorbestimmte Wahrscheinlichkeit P nicht überschreitet, oder eine statistische CQI-Metrik, die basierend auf einem oder mehreren der CQI-Werte erzeugt wurde, umfasst.

**14.** Verfahren nach Anspruch 13, wobei die statistische CQI-Metrik eines oder mehrere von Folgenden umfasst: einen Durchschnitt, ein Maximum, einen Median, eine Standardabweichung, eine Varianz und einen CQI-Variationsindex, der eine Variation der CQI-Werte darstellt.

**15.** Verfahren nach einem der Ansprüche 12 bis 14, wobei der Indikator einen mittleren oder einen medianen CQI-Wert umfasst und die CSI-Meldung eine erste CSI-Meldung umfasst, wobei das Verfahren ferner Erzeugen eines Variationsmaßes der CQI-Werte und Übermitteln des Variationsmaßes der CQI-Werte in einer zweiten CSI-Meldung umfasst.

**16.** Netzwerkknoten (1400), umfassend:

eine Verarbeitungsschaltung (1403);
einen Sendeempfänger (1402), der mit der Verarbeitungsschaltung gekoppelt ist; und
einen Speicher (1405), der mit der Verarbeitungsschaltung gekoppelt ist, wobei der Speicher computerlesbare Programmanweisungen umfasst, die, wenn sie durch die Verarbeitungsschaltung ausgeführt werden, das Netzwerk dazu veranlassen, Vorgänge nach einem der Ansprüche 9 bis 15 durchzuführen.

**Revendications**

**1.** Procédé de fonctionnement d'un équipement utilisateur, UE, comprenant :

l'exécution (202) d'une mesure de canal sur une ressource de mesure pour une mesure de canal dans un intervalle de temps d'une longueur prs ;
l'exécution (204) de mesures d'interférence périodiques sur des ressources de mesure dans l'intervalle de temps, dans lequel les mesures d'interférence périodiques sont prises selon une période de longueur pim, où pim < prs ;
pour chaque mesure d'interférence, la détermination (206) d'une valeur de qualité associée à la mesure d'interférence et à la mesure de canal ;

la détermination (208) d'une mesure statistique sur la base des valeurs de qualité ; et
la transmission (210) de la mesure statistique à un noeud de réseau dans un rapport d'informations d'état de canal, CSI.

2. Procédé selon la revendication 1, dans lequel la valeur de qualité comprend un ou plusieurs parmi un indicateur de qualité de canal, CQI, des informations de symbole, un rapport signal sur interférence et bruit, SINR, et une efficacité spectrale, SE.

3. Procédé selon la revendication 1 ou 2, dans lequel la mesure statistique comprend un ou plusieurs parmi une valeur maximale, une valeur minimale, une moyenne, une variance, un écart type et un percentile de distribution.

4. Procédé selon la revendication 1, comprenant en outre, pour chaque mesure d'interférence dans l'intervalle de temps, la détermination d'une valeur d'indicateur de qualité de canal, CQI, associée à la mesure d'interférence.

5. Procédé selon la revendication 4, dans lequel l'indicateur comprend une ou plusieurs parmi : les valeurs CQI, la plus élevée des valeurs CQI pour laquelle un bloc de transport de liaison descendante peut être reçu avec une probabilité d'erreur ne dépassant pas une probabilité prédéterminée P et une métrique statistique CQI générée sur la base d'une ou de plusieurs des valeurs CQI.

6. Procédé selon la revendication 5, dans lequel la métrique statistique CQI comprend un ou plusieurs parmi : une moyenne, un maximum, une médiane, un écart type, une variance et un indice de variation CQI qui représente la variation des valeurs CQI.

7. Procédé selon l'une quelconque des revendications 4 à 6, dans lequel l'indicateur comprend une valeur CQI moyenne ou médiane et le rapport CSI comprend un premier rapport CSI, le procédé comprenant en outre la génération d'une mesure de variation des valeurs CQI et la transmission de la mesure de variation des valeurs CQI dans un second rapport CSI.

8. Équipement utilisateur, UE (1500), comprenant :

   un circuit de traitement (1503) ;
   un émetteur-récepteur (1502) couplé au circuit de traitement ; et
   une mémoire (1505) couplée au circuit de traitement, dans lequel la mémoire comprend des instructions de programme lisibles par ordinateur qui, lorsqu'elles sont exécutées par le circuit de traitement, amènent l'UE à exécuter des opérations selon l'une quelconque des revendications 1 à 7.

9. Procédé de fonctionnement d'un noeud de réseau, comprenant :

   la configuration (302) d'un équipement utilisateur, UE, pour exécuter une mesure de canal sur une ressource de mesure de canal dans un intervalle de temps d'une longueur prs ;
   la configuration (304) de l'UE pour exécuter des mesures d'interférence périodiques dans l'intervalle de temps, dans lequel les mesures d'interférence périodiques sont prises selon une période de longueur pim, où pim < prs ;
   la configuration (306) de l'UE pour déterminer, pour chaque mesure d'interférence, une valeur de qualité associée à la mesure d'interférence et à la mesure de canal ;
   la configuration (308) de l'UE pour déterminer une mesure statistique sur la base des valeurs de qualité ; et
   la réception (310) de la mesure statistique à partir de l'UE dans un rapport d'informations d'état de canal, CSI.

10. Procédé selon la revendication 9, dans lequel la valeur de qualité comprend un ou plusieurs parmi un indicateur de qualité de canal, CQI, des informations de symbole, un rapport signal sur interférence et bruit, SINR, et une efficacité spectrale, SE.

11. Procédé selon la revendication 9 ou 10, dans lequel la mesure statistique comprend un ou plusieurs parmi une valeur maximale, une valeur minimale, une moyenne, une variance, un écart type et un percentile de distribution.

12. Procédé selon l'une quelconque des revendications 9 à 11, comprenant en outre :
la configuration de l'UE, pour chaque mesure d'interférence dans l'intervalle de temps, pour déterminer une valeur d'indicateur de qualité de canal, CQI, associée à la mesure d'interférence.

**13.** Procédé selon la revendication 12, dans lequel l'indicateur comprend une ou plusieurs parmi les valeurs CQI ou la plus élevée des valeurs CQI pour laquelle un bloc de transport de liaison descendante peut être reçu avec une probabilité d'erreur ne dépassant pas une probabilité prédéterminée P ou une métrique statistique CQI générée sur la base d'une ou de plusieurs des valeurs CQI.

**14.** Procédé selon la revendication 13, dans lequel la métrique statistique CQI comprend un ou plusieurs parmi : une moyenne, un maximum, une médiane, un écart type, une variance et un indice de variation CQI qui représente la variation des valeurs CQI.

**15.** Procédé selon l'une quelconque des revendications 12 à 14, dans lequel l'indicateur comprend une valeur CQI moyenne ou médiane et le rapport CSI comprend un premier rapport CSI, le procédé comprenant en outre la génération d'une mesure de variation des valeurs CQI et la transmission de la mesure de variation des valeurs CQI dans un second rapport CSI.

**16.** Noeud de réseau (1400), comprenant :

un circuit de traitement (1403) ;
un émetteur-récepteur (1402) couplé au circuit de traitement ; et
une mémoire (1405) couplée au circuit de traitement, dans lequel la mémoire comprend des instructions de programme lisibles par ordinateur qui, lorsqu'elles sont exécutées par le circuit de traitement, amènent le réseau à exécuter des opérations selon l'une quelconque des revendications 9 à 15.

**FIGURE 1**

Performing a channel measurement on measurement
resource for channel measurement
202

Performing two or more interference measurements
on two or more measurement resources for
interference
204

Determining quality values associated with the
interference measurement and the channel
measurement
206

Determining a statistical measure based on the quality
values
208

Transmitting the statistical measure to a network
node in a channel state information report
210

# FIGURE 2

Configuring a UE to perform a channel measurement
on a measurement resource
302

Configuring the UE to perform two or more
interference measurements on two or more
interference measurement resources
304

Configuring the UE to determine quality values
associated with the interference measurements and
the channel measurement
306

Configuring the UE to determine a statistical measure
based on the quality values
308

Receiving a channel state information report from the
UE including the statistical measure
310

FIGURE 3

H: channel estimate from channel measurement
Q: noise and interference covariance estimate from interference measurement

Legacy CSI ($PMI_{i-1}$, $RI_{i-1}$, $CQI_{i-1}$)
based on $H_{i-1}$ and $Q_{j-2}$

Statistical CSI ($m_{CQI}$, $s_{CQI}$)
based on $H_{i-1}$ and ($Q_{j-1}$, $Q_j$)
conditioned $PMI_{i-1}$ and $RI_{i-1}$

| $Q_{j-3}$ | $Q_{j-2}$ $H_{i-1}$ | $Q_{j-1}$ | $Q_j$ $H_i$ | $Q_{j+1}$ | $Q_{j+2}$ $H_{i+1}$ |

## FIGURE 4

Reference resource

Unreported resource

Allocation Hypothesis

Frequency

Full bandwidth

MCS 2 hypothesis
MCS 4 hypothesis
MCS 0 hypothesis
MCS 0 hypothesis
MCS 6 hypothesis
MCS 8 hypothesis
MCS 8 hypothesis
MCS 10 hypothesis
MCS 10 hypothesis

Time

Slot x-3 | Slot x-2 | Slot x-1 | Slot x

## FIGURE 5

```
┌─────────────────────────────────────────────────┐
│                                                 │
│      Receiving an allocation of a reference     │
│   resource defined by a reference transport     │
│   block size, TBS, and a reference time         │
│   allocation                                    │
│                     602                         │
│                                                 │
└─────────────────────────────────────────────────┘
                        │
                        ▼
┌─────────────────────────────────────────────────┐
│                                                 │
│   Dividing the reference resource into a        │
│   plurality of time intervals based on the      │
│   reference time allocation, for each time      │
│   interval of the plurality of time intervals   │
│                     604                         │
│                                                 │
└─────────────────────────────────────────────────┘
                        │
                        ▼
┌─────────────────────────────────────────────────┐
│                                                 │
│   Determining a modulation and coding scheme,   │
│   MCS, that may be sufficient to satisfy a      │
│   target error probability                      │
│                     606                         │
│                                                 │
└─────────────────────────────────────────────────┘
                        │
                        ▼
┌─────────────────────────────────────────────────┐
│                                                 │
│   For each time interval, encoding the          │
│   determined MCS into a channel quality         │
│   indicator, CQI, index                         │
│                     608                         │
│                                                 │
└─────────────────────────────────────────────────┘
                        │
                        ▼
┌─────────────────────────────────────────────────┐
│                                                 │
│   Transmitting the CQI index for each time      │
│   interval to a network node                    │
│                     610                         │
│                                                 │
└─────────────────────────────────────────────────┘
```

## FIGURE 6

Transmitting an allocation of a reference resource
defined by a reference transport block size, TBS, and a
reference time allocation
702

Receiving a channel quality indicator, CQI, index from
the UE
704

# FIGURE 7

**FIGURE 8**

Generating a CSI report such that a target block error
rate can be achieved on average over a time period or
over a sub-set of the time period
902

Transmitting the CSI report to a network node
904

## FIGURE 9

Performing a channel measurement on a downlink
channel that utilizes packet repetition according to a
packet repetition procedure
1002

Generating a channel quality index, CQI, based on the
channel measurement according to a CQI table that
specifies code rate and efficiency, wherein the code
rate and efficiency in the CQI table are scaled by a
scaling factor S
1004

Transmitting the CSI report to a network node
1006

## FIGURE 10

Configuring a UE to perform a channel measurement
on a downlink channel that utilizes packet repetition
according to a packet repetition procedure
1102

Configuring the UE to generate a channel quality
index, CQI, based on the channel measurement
according to a CQI table that specifies code rate and
efficiency, wherein the code rate and efficiency in the
CQI table are scaled by a scaling factor S
1104

Receiving the CSI report from the UE
1106

# FIGURE 11

Receiving a CSI reporting procedure from a network node, the CSI reporting procedure defining downlink, DL, reference signal and uplink, UL, reporting periodicities
1202

Generating CSI reports according to the CSI reporting procedure
1204

Transmitting the CSI reports to the network node according to the CSI reporting procedure
1206

## FIGURE 12

Transmitting a CSI reporting procedure to a UE, the CSI reporting procedure defining downlink, DL, reference signal and uplink, UL, reporting periodicities
1302

Receiving CSI reports from the UE according to the CSI reporting procedure
1304

*FIGURE 13*

**FIGURE 14**

**FIGURE 15**

FIGURE 16

1610b Wireless Device

1610c Wireless Device

1660b Network Node

1606 Network

1670 Wireless
Signal

1662
Antenna(s)

**1610 Wireless Device**

1611
Antenna(s)

1614 Interface

1612 Radio Front End Circuitry

1618 Filter(S) | 1616 Amplifier(S)

1637 Power
Circuitry

1622 RF
Tranceiver
Circuitry

1626 Application
Processing
Circuitry

1624 Baseband
Circuitry

1620 Processing
Circuitry

1630 Device
Readable
Medium

1632 User
Interface
Equipment

1634 Auxiliary Equipment

1636 Power Source

**1660 Network Node**

1692 Radio Front
End Circuitry

1694 Port(s)/
Terminal(s)

1698 Filter(s)

1696
Amplifier(s)

1690
Interface

1687 Power
Circuitry

1672 RF Tranceiver Circuitry

1674 Baseband
Circuitry

1670 Processing
Circuitry

1680 Device Readable Medium

1684 Auxiliary Equipment

1686 Power Source

EP 4 049 392 B1

45

# FIGURE 17

1743b Network

1743a Network

1700

| 1701 Processor | 1705 Input/Output Interface | 1709 RF Interface | 1711 Network Connection Interface | 1713 Power Source |

1702 Bus

### 1715 Memory

1717 RAM

1719 ROM

1721 Storage Medium

1723 Operating System

1725 Application Programs

1727 Data

### 1731 Communication Subsystem

1733 Transmitter

1735 Receiver

EP 4 049 392 B1

# FIGURE 18

**FIGURE 19**

**FIGURE 20**

```
                    ╭─────────────╮
                    │    BEGIN     │
                    ╰─────────────╯
                           │
         ┌─────────────────┐        ┌ ─ ─ ─ ─ ─ ─ ─ ─ ┐
         │      2110        │         2111
         │  Host computer   │◄──────►│ Host computer    │
         │  provides user   │         executes host
         │      data        │        │ application      │
         └─────────────────┘        └ ─ ─ ─ ─ ─ ─ ─ ─ ┘
                  │
         ┌─────────────────┐
         │      2120        │
         │  Host computer   │                 FIGURE 21
         │initiates transmission│
         │carrying the user data│
         │     to the UE    │
         └─────────────────┘
                  │
         ┌ ─ ─ ─ ─ ─ ─ ─ ─ ┐
              2130
         │Base station transmits│
             the user data
         │                 │
         └ ─ ─ ─ ─ ─ ─ ─ ─ ┘
                  │
         ┌ ─ ─ ─ ─ ─ ─ ─ ─ ┐
              2140
         │ UE executes client│
             application
         │                 │
         └ ─ ─ ─ ─ ─ ─ ─ ─ ┘
                  │
         ╭─────────────╮
         │     END      │
         ╰─────────────╯
```

FIGURE 21

BEGIN

2210
Host computer provides user data

2220
Host computer initiates transmission carrying the user data to the UE

2230
UE receives the user data

END

FIGURE 22

BEGIN

2310
UE receives input data
provided at host
computer

2311
UE executes client
application

2320
UE provides user data

2321
UE executes client
application

2330
UE initiates
transmission of the user
data to the host
computer

*FIGURE 23*

2340
Host computer receives
user data transmitted
from the UE

END

BEGIN

2410
Base station receives user data
from UE

2420
Base station initiates
transmission of user data to
the host computer

*FIGURE 24*

2430
Host computer receives the
user data

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009274204 A1
- EP 3185446 A1
- WO 2007078112 A
- EP 1783943 A